# EUROPEAN PATENT SPECIFICATION

(11) **EP 4 536 769 B1**
(45) Date of publication and mention of the grant of the patent: **18.03.2026**
(21) Application number: 23748142.9
(22) Date of filing: 29.06.2023
(51) Int. Cl.: C09D 183/05, C09D 183/07, C09D 183/04

(54) **COMPOSITION FOR PREPARING A RELEASE COATING**
ZUSAMMENSETZUNG ZUR HERSTELLUNG EINER TRENNBESCHICHTUNG
COMPOSITION POUR LA PRÉPARATION D'UN REVÊTEMENT ANTI-ADHÉSIF

(30) Priority: 30.06.2022 US 202263357173 P
(43) Date of publication of application: 16.04.2025
(73) Proprietor: Dow Silicones Corporation, Midland, Michigan 48686 (US)
(72) Inventor: NIU, Zhenbin, Midland, Michigan 48686-0994 (US); JELETIC, Matthew, Midland, Michigan 48686-0994 (US); DEGROOT JR., Jon V., Midland, Michigan 48686-0994 (US)
(74) Representative: Elkington and Fife LLP
(86) International application number: PCT/US2023/026568
(87) International publication number: WO 2024/006430

(56) References cited:
- US-A1- 2006 111 491

## Description

### TECHNICAL FIELD

The subject disclosure generally relates to a composition and, more specifically, to a composition for preparing a release coating and related methods.

### BACKGROUND

Silicone compositions are known in the art and utilized in myriad industries and end use applications. One such end use application is to form release coatings or liners from which adhesives can be removed. For example, silicone compositions may be utilized to coat various substrates, such as paper, to give release liners for laminating pressure sensitive adhesives (e.g. tapes). Such silicone compositions are typically addition-curable.

Conventional release liners are typically formed by addition reacting (or hydrosilylating) an organopolysiloxane having an unsaturated hydrocarbon group and an organohydrogenpolysiloxane in the presence of a hydrosilylation reaction catalyst, as disclosed in US 2006/111491 A1. It's generally desirable to extend bathlife of compositions for preparing release liners to extend working life and minimize premature cure. As such, inhibitors are typically included in conventional compositions for preparing release liners. However, inhibitors and hydrosilylation reaction catalysts also have compatibility issues that influence bathlife and influence performance properties of the resulting release coatings.

### BRIEF SUMMARY

A composition for forming a release coating is disclosed. The composition comprises (A) an organopolysiloxane comprising at least one RSiO_{3/2} siloxy unit or at least one SiO_{4/2} siloxy unit, where R is a substituted or unsubstituted hydrocarbyl group. The (A) organopolysiloxane has an average of at least two silicon-bonded ethylenically unsaturated groups per molecule. The composition further comprises (B) an organosilicon compound having an average of at least two silicon-bonded hydrogen atoms per molecule. Finally, the composition comprises (C) a hydrosilylation catalyst comprising a metal-ligand complex having the formula MLₓD_{y}, wherein M is a metal; x is equal to the oxidation state of M; each D is independently a neutral coordinating ligand; y is zero or an integer from 1 to 4; and each L is a mono-anionic ligand independently having the formula: 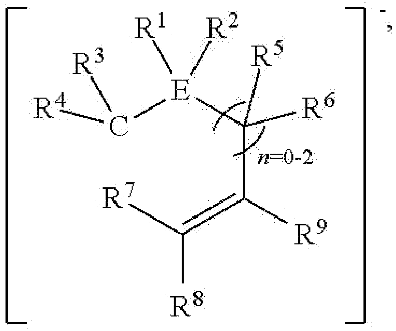 wherein each R¹ and R² is independently a halide or a substituted or unsubstituted group selected from a C₁-C₆ alkyl, a C₃-C₈ cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₈ alkynyl, a C₁-C₆ hydroxyl, a C₃-C₁₀ arylene, a C₃-C₁₀ heteroarylene, a C₂-C₁₀ alkenylene, a C₃-C₁₀ cycloalkenylene, and a C₂-C₁₀ alkynylene, wherein each of R³, R⁴, R⁵, R⁶, R⁷, R⁸, and R⁹ is independently selected from hydrogen, a halide, or a substituted or unsubstituted group selected from a C₁-C₆ alkyl, a C₃-C₈ cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₁₀ alkynyl, a C₁-C₆ hydroxyl, a C₃-C₁₀ arylene, a C₃-C₁₀ heteroarylene, a C₂-C₁₀ alkenylene, a C₃-C₁₀ cycloalkenylene, and a C₂-C₁₀ alkynylene; and wherein E is C or Si.

A method of preparing the composition is also disclosed. In addition, a method of preparing a coated substrate comprising a release coating disposed on a substrate, as well as the coated substrate formed in accordance with the method, are disclosed.

### DETAILED DESCRIPTION

A composition for forming a release coating is disclosed. The composition has excellent stability at room temperature, thus providing an extended bathlife for release coating applications.

The composition comprises (A) an organopolysiloxane comprising at least one RSiO_{3/2} siloxy unit or at least one SiO_{4/2} siloxy unit, where R is a substituted or unsubstituted hydrocarbyl group. As known in the art, RSiO_{3/2} siloxy units are T siloxy units, and SiO_{4/2} siloxy units are Q siloxy units. T and/or Q siloxy units are present in branched and resinous organopolysiloxanes. As such, in one embodiment, the (A) organopolysiloxane is branched. In another embodiment, the (A) organopolysiloxane is resinous. Combinations of different organopolysiloxanes may be utilized as the (A) organopolysiloxane, and even linear organopolysiloxanes may be utilized along with those having at least one RSiO_{3/2} siloxy unit or at least one SiO_{4/2} siloxy unit. The (A) organopolysiloxane has an average of at least two silicon-bonded ethylenically unsaturated groups per molecule. The silicon-bonded ethylenically unsaturated groups may be terminal and/or pendent in the (A) organopolysiloxane. In certain embodiments, the (A) organopolysiloxane has an average, per molecule, of at least two silicon bonded groups having terminal aliphatic unsaturation.

In general, hydrocarbyl groups suitable for R may independently be linear, branched, cyclic, or combinations thereof. Cyclic hydrocarbyl groups encompass aryl groups as well as saturated or non-conjugated cyclic groups. Cyclic hydrocarbyl groups may independently be monocyclic or polycyclic. Linear and branched hydrocarbyl groups may independently be saturated or unsaturated. One example of a combination of a linear and cyclic hydrocarbyl group is an aralkyl group. General examples of hydrocarbyl groups include alkyl groups, aryl groups, alkenyl groups, halocarbon groups, and the like, as well as derivatives, modifications, and combinations thereof. Examples of suitable alkyl groups include methyl, ethyl, propyl (e.g. isopropyl and/or n-propyl), butyl (e.g. isobutyl, n-butyl, tert-butyl, and/or sec-butyl), pentyl (e.g. isopentyl, neopentyl, and/or tert-pentyl), hexyl, hexadecyl, octadecyl, as well as branched saturated hydrocarbon groups having from 6 to 18 carbon atoms. Examples of suitable non-conjugated cyclic groups include cyclobutyl, cyclohexyl, and cycyloheptyl groups. Examples of suitable aryl groups include phenyl, tolyl, xylyl, naphthyl, benzyl, and dimethyl phenyl. Examples of suitable alkenyl groups include vinyl, allyl, propenyl, isopropenyl, butenyl, isobutenyl, pentenyl, heptenyl, hexenyl, octenyl, hexadecenyl, octadecenyl and cyclohexenyl groups. Examples of suitable monovalent halogenated hydrocarbon groups (i.e., halocarbon groups) include halogenated alkyl groups, aryl groups, and combinations thereof. Examples of halogenated alkyl groups include the alkyl groups described above where one or more hydrogen atoms is replaced with a halogen atom such as F or Cl. Specific examples of halogenated alkyl groups include fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl, 2,2-difluorocyclopropyl, 2,3-difluorocyclobutyl, 3,4-difluorocyclohexyl, and 3,4-difluoro-5-methylcycloheptyl, chloromethyl, chloropropyl, 2-dichlorocyclopropyl, and 2,3-dichlorocyclopentyl groups, as well as derivatives thereof. Examples of halogenated aryl groups include the aryl groups described above where one or more hydrogen atoms is replaced with a halogen atom, such as F or Cl. Specific examples of halogenated aryl groups include chlorobenzyl and fluorobenzyl groups.

In specific embodiments, each R is independently selected from alkyl groups having from 1 to 32, alternatively from 1 to 28, alternatively from 1 to 24, alternatively from 1 to 20, alternatively from 1 to 16, alternatively from 1 to 12, alternatively from 1 to 8, alternatively from 1 to 4, alternatively 1, carbon atoms, and from ethylenically unsaturated (i.e., alkenyl and/or alkynyl groups) groups having from 2 to 32, alternatively from 2 to 28, alternatively from 2 to 24, alternatively from 2 to 20, alternatively from 2 to 16, alternatively from 2 to 12, alternatively from 2 to 8, alternatively from 2 to 4, alternatively 2, carbon atoms. "Alkenyl" means an acyclic, branched or unbranched, monovalent hydrocarbon group having one or more carbon-carbon double bonds. Specific examples thereof include vinyl groups, allyl groups, hexenyl groups, and octenyl groups. "Alkynyl" means an acyclic, branched or unbranched, monovalent hydrocarbon group having one or more carbon-carbon triple bonds. Specific examples thereof include ethynyl, propynyl, and butynyl groups. Various examples of ethylenically unsaturated groups include CH₂=CH-, CH₂=CHCH₂-, CH₂=CH(CH₂)₄-, CH₂=CH(CH₂)₆-, CH₂=C(CH₃)CH₂-, H₂C=C(CH₃)-, H₂C=C(CH₃)-, H₂C=C(CH₃)CH₂-, H₂C=CHCH₂CH₂-, H₂C=CHCH₂CH₂CH₂-, HC≡C-, HC≡CCH₂-, HC≡CCH(CH₃)-, HC≡CC(CH₃)₂-, and HC≡CC(CH₃)₂CH₂-. Typically, when R is an ethylenically unsaturated group, the aliphatic unsaturation is terminal in R. As understood in the art, ethylenic unsaturation may be referred to as aliphatic unsaturation.

The (A) organopolysiloxane may have average formula: RₘSiO_{(4-m)/2}, where each R is independently selected and defied above, with the proviso that in each molecule, at least two of R include aliphatic unsaturation, and where subscript m is selected such that 0 < m ≤ 3.2. The average formula above for the (A) organopolysiloxane may be alternatively written as (R₃SiO_{1/2})ₑ(R₂SiO_{2/2})_{f}(RSiO_{3/2})_{g}(SiO_{4/2})ₕ, where R is defined above, and subscripts e, f, g, and h are each independently from ≥ 0 to ≤ 1, with the provisos that subscripts g and h are not simultaneously 0 and that a quantity (e + f + g + h) = 1. One of skill in the art understands how such M, D, T, and Q units and their molar fractions influence subscript m in the average formula above.

In one embodiment, the (A) organopolysiloxane may comprise a resinous polyorganosiloxane. The resinous polyorganosiloxane may have the average formula: R_{m'}SiO_{(4-m')/2}, where each R is independently selected as defined above, and where subscript m' is selected such that 0.5 ≤ m' S 1.7.

The resinous polyorganosiloxane has a branched or a three dimensional network molecular structure. At 25 °C, the resinous polyorganosiloxane may be in a liquid or in a solid form. Alternatively, the resinous polyorganosiloxane may be exemplified by a polyorganosiloxane that comprises only T units, a polyorganosiloxane that comprises T units in combination with other siloxy units (e.g., M, D, and/or Q siloxy units), or a polyorganosiloxane comprising Q units in combination with other siloxy units (i.e., M, D, and/or T siloxy units). Typically, the resinous polyorganosiloxane comprises T and/or Q units. Specific example of the resinous polyorganosiloxane include a vinyl-terminated silsesquioxane (i.e., T resin or silsesquioxane resin), a vinyl-terminated MDQ resin, and/or a vinyl-terminated MQ resin.

Alternatively, the (A) organopolysiloxane may comprise, alternatively consist of, a branched siloxane, a silsesquioxane, or both a branched siloxane and a silsesquioxane.

When the (A) organopolysiloxane comprises a blend of different organopolysiloxanes, the blend may be a physical blend or mixture. For example, when the (A) organopolysiloxane comprises the branched siloxane and the silsesquioxane, the branched siloxane and the silsesquioxane can be present in amounts relative to one another such that the amount of the branched siloxane and the amount of the silsesquioxane combined total 100 weight parts, based on combined weights of all components present in the composition. The branched siloxane may be present in an amount of 50 to 100 parts by weight, and the silsesquioxane may be present in an amount of 0 to 50 parts by weight. Alternatively, the branched siloxane may be present in an amount 50 to 90 parts by weight and the silsesquioxane may be present in an amount of 10 to 50 parts by weight. Alternatively, the branched siloxane may be present in an amount of 50 to 80 parts by weight and the silsesquioxane may be present in an amount of 20 to 50 parts by weight. Alternatively, the branched siloxane may be present in an amount of 50 to 76 parts by weight and the silsesquioxane may be present in an amount of 24 to 50 parts by weight. Alternatively, the branched siloxane may be present in an amount of 50 to 70 parts by weight and the silsesquioxane may be present in an amount of 30 to 50 parts by weight.

In certain embodiments, the branched siloxane of the (A) organopolysiloxane may have average unit formula:

(R₃SiO_{1/2})ₚ(R₂SiO_{2/2})q(SiO_{4/2})ᵣ,

wherein each R is independently selected and defined above, with the proviso that at least two, alternatively at least three of R include aliphatic unsaturation; 0 <ps 0.3, 0.4≤q≤0.97, and 0<r≤0.3, with the proviso that p+q+r=1.

The branched siloxane of the (A) organopolysiloxane generally comprises M siloxy units (i.e., the (R₃SiO_{1/2}) siloxy units), D siloxy units (i.e., the (R₂SiO_{2/2}) siloxy units), and one or more Q siloxy units (i.e., the (SiO_{4/2}) siloxy units), alternatively consists of M, D, and Q siloxy units. Although the branched siloxane of the (A) organopolysiloxane includes at least one Q siloxy unit, the branched siloxane of the (A) organopolysiloxane is considered a branched silicone polymer by one of skill in the art, rather than a silicone resin, due to the degree of polymerization (DP) in the branched siloxane of the (A) organopolysiloxane and the molar fraction of Q siloxy units present therein.

The general formula of the branched siloxane of the (A) organopolysiloxane is representative of the average formula of the M, D and Q siloxy units. For example, the M siloxy units may be independently selected within the formula (R₃SiO_{1/2}), and the D siloxy units may be independently selected within the formula (R₂SiO_{2/2}). The subscripts, or mole fractions of the M, D and Q siloxy units in the branched siloxane of the (A) organopolysiloxane, are collectively based on all M siloxy units, all D siloxy units, and all Q siloxy units, respectively, present in the branched siloxane of the (A) organopolysiloxane. By way of example, the branched siloxane of the (A) organopolysiloxane may include M units independently having zero, one, two, or three silicon-bonded ethylenically unsaturated groups. Similarly, the branched siloxane of the (A) organopolysiloxane may include D units independently having zero, one, or two silicon-bonded ethylenically unsaturated groups. Such silicon-bonded ethylenically unsaturated groups present in M siloxy units are considered terminal, whereas those present in D siloxy units are considered pendent.

In specific embodiments, the branched siloxane of the (A) organopolysiloxane has one Q siloxy unit. In other embodiments, the branched siloxane of the (A) organopolysiloxane has two Q siloxy units, alternatively three Q siloxy units. The branched siloxane of the (A) organopolysiloxane may have a degree of polymerization (DP) of from 1 to 3000, alternatively from 2 to 2000, alternatively from 3 to 1000, alternatively from 4 to 750, alternatively from 5 to 400, alternatively from 10 to 200, alternatively from 14 to 180. The DP is generally the total number of D units present in the branched siloxane of the (A) organopolysiloxane, i.e., the DP may be based on more than one linear chain within the branched siloxane of the (A) organopolysiloxane.

In specific embodiments when the branched siloxane of the (A) organopolysiloxane includes one Q siloxy unit, the branched siloxane of the (A) organopolysiloxane may have average unit formula:

(R₃SiO_{1/2})ₓ(R₂SiO_{2/2})_{z}(SiO_{4/2}),

where each R is independently a substituted or unsubstituted hydrocarbyl group, with the proviso that at least two of R are independently selected ethylenically unsaturated groups, subscript x is from 0.05 to 4, and subscript z is from 1 to 3,000.

In specific embodiments, the silicon-bonded ethylenically unsaturated groups are present in one or more M siloxy units (e.g. as vinyldimethyl siloxy units, divinylmethyl siloxy units, and/or trivinyl siloxy units). Alternatively, in other embodiments, the silicon-bonded ethylenically unsaturated groups are present in one or more D siloxy units (e.g. as methylvinyl siloxy groups and/or as divinyl siloxy groups). Alternatively still, the silicon-bonded ethylenically unsaturated groups may be present in one or more of each of the M and D siloxy units. One of skill in the art appreciates that these specific siloxy groups are exemplary only, and vinyl may be replaced with other ethylenically unsaturated groups, and methyl may be replaced with other hydrocarbyl groups.

In specific embodiments in which the branched siloxane of the (A) organopolysiloxane includes a single Q siloxy unit, the branched siloxane of the (A) organopolysiloxane has the following general formula:

Si-[[OSiR₂]_{b'}[OSiR₃]]₄

wherein each R is independently selected and defined above, with the proviso that at least two of R include aliphatic unsaturation, and each b' independently is from 0 to 200, alternatively from 1 to 100.

However, because the branched siloxane of the (A) organopolysiloxane includes D siloxy units, all instances of b' (i.e., all four instances) cannot simultaneously be 0. The DP of the branched siloxane of the (A) organopolysiloxane in these embodiments is based on the aggregate or collective amount of b'. The branched siloxane of the (A) organopolysiloxane includes at least one, alternatively at least two, alternatively at least three, alternatively four, substantially linear, alternatively linear, chains extending from the silicon atom of the Q unit. These substantially linear, alternatively linear, chains correspond to the repeating D siloxy units when any iteration of b' is greater than 0.

In these specific embodiments, the branched siloxane of the (A) organopolysiloxane includes a single Q siloxy unit and no T siloxy units. T siloxy units, as understood in the art, may be represented by RSiO_{3/2}, and include one silicon-bonded substituent R. The branched siloxane of the (A) organopolysiloxane includes D siloxy units, corresponding to each iteration of subscript b'. Because b' is independently selected, each linear chain of D siloxy units indicated by subscript b' may vary, i.e., each b' may be the same as or different from one another. One or more instances of b' may be 0 such that an M siloxy unit is bonded directly to the single Q siloxy unit, although typically each M siloxy unit is spaced from the Q siloxy unit by at least one D siloxy unit. The branched siloxane of the (A) organopolysiloxane may also be generally symmetrical, i.e., when all instances of b' are the same. Each of the linear chains of D siloxy units in the branched siloxane of the (A) organopolysiloxane terminates with an M siloxy unit.

In specific embodiments, the branched siloxane of the (A) organopolysiloxane has the general formula:

Si-[[OSiMe₂]_{b'}[OSiMe₂Vi]]₄

where b' is independently selected and defined above, Me designates methyl, and Vi designates vinyl.

In other specific embodiments, the branched siloxane of the (A) organopolysiloxane has the general formula:

Si-[[OSiViMe]_{b'}[OSiMe₃]]₄

where b' is independently selected and defined above.

In yet other specific embodiments, the branched siloxane of the (A) organopolysiloxane has the general formula:

Si-[[OSiViMe]_{b'}[OSiMe₂Vi]]₄

where b' is independently selected and defined above.

Further still, each D and M siloxy unit in the branched siloxane of the (A) organopolysiloxane is independently selected. As such, any of the specific examples above may be modified. For example, in one embodiment, the branched siloxane of the (A) organopolysiloxane may include three dimethylvinylsiloxy units, and one trimethylsiloxy unit.

Alternatively, the (A) organopolysiloxane may have formula: 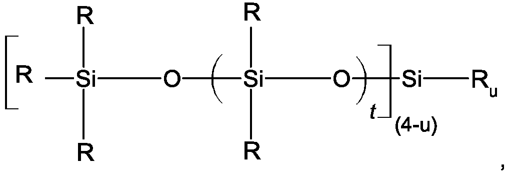 where subscript u is 0 or 1, each subscript t is independently from 0 to 995, alternatively from 15 to 995, alternatively from 0 to 100; each R is independently selected and defined above with the proviso that at least two of R are independently selected ethylenically unsaturated groups.

The (A) organopolysiloxane may be a silsesquioxane having the average unit formula: (R¹⁰₃SiO_{1/2})ᵢ(R¹¹R¹⁰₂SiO_{1/2})_{f}(R¹⁰₂SiO_{2/2})_{g}(R¹⁰SiO_{3/2})ₕ, where each R¹⁰ is an independently selected hydrocarbyl group free of aliphatic unsaturation, each R¹¹ is an independently selected ethylenically unsaturated group, subscript i ≥ 0, subscript f > 0, subscript g is 15 to 995, and subscript h > 0. Subscript i may be 0 to 10. Alternatively, for subscript i: 12 ≥ i ≥ 0; alternatively 10 ≥ i ≥ 0; alternatively 7 ≥ i ≥ 0; alternatively 5 ≥ i ≥ 0; and alternatively 3 ≥ i ≥ 0.

Alternatively, subscript f ≥ 1. Alternatively, subscript f ≥ 3. Alternatively, for subscript f: 12 ≥ f > 0; alternatively 12 ≥ f ≥ 3; alternatively 10 ≥ f > 0; alternatively 7 ≥ f > 1; alternatively 5 ≥ f ≥ 2; and alternatively 7 ≥ f ≥ 3. Alternatively, for subscript g: 800 ≥ g ≥ 15; and alternatively 400 ≥ g ≥ 15. Alternatively, subscript h ≥ 1. Alternatively, subscript h is 1 to 10. Alternatively, for subscript h: 10 ≥ h > 0; alternatively 5 ≥ h >0; and alternatively h = 1. Alternatively, subscript h is 1 to 10, alternatively subscript h is 1 or 2. Alternatively, when subscript h = 1, then subscript f may be 3 and subscript i may be 0.

The (A) organopolysiloxane may have the formula (R₃SiO_{1/2})_{x'}(R₂SiO_{2/2})_{z'}(SiO_{4/2})_{1.0}(ZO_{1/2})_{w}, where each R is independently selected and defined above, with the proviso that in each molecule, at least two of R are independently selected ethylenically unsaturated groups, subscript x' is from 1.5 to 4; Z is independently selected from H and alkyl groups having from 1 to 4 carbon atoms; subscript w is from 0 to 3; and subscript z' is from 3 to 1,000. Moieties represented by (ZO_{4/2}) are typically inherently present when the (A) organopolysiloxane is prepared via hydrolysis and condensation of silanes. Moieties represented by (ZO_{1/2}) may be absent from the (A) organopolysiloxane depending on its method of preparation.

Regardless of the selection of the branched siloxane of the (A) organopolysiloxane, the branched siloxane of the (A) organopolysiloxane has at least two, alternatively at least three silicon-bonded ethylenically unsaturated groups. In certain embodiments, the branched siloxane of the (A) organopolysiloxane has a content of ethylenically unsaturated groups of from 2.0 to 7.0, alternatively from 2.0 to 6.0, alternatively from 2.0 to 5.5, wt.% based on the total weight of the branched siloxane of the (A) organopolysiloxane. This is typically the case when each R group is methyl or vinyl. However, as understood in the art, the same number of R groups may constitute a lesser overall wt.% when R is something other than methyl (e.g. ethyl, aryl) and/or when R is something other than vinyl (e.g. allyl, hexenyl), which impact the molecular weight of the branched siloxane of the (A) organopolysiloxane . The content of R can be interpreted and calculated using Silicon 29 Nuclear Magnetic Resonance Spectroscopy (²⁹Si NMR), as understood in the art. In certain embodiments, the branched siloxane of the (A) organopolysiloxane has a viscosity at 25 °C from greater than 0 to less than 400, alternatively from greater than 0 to less than 300, alternatively from greater than 0 to less than 200, mPa·s.

The (A) organopolysiloxane may comprise a combination or two or more different polyorganosiloxanes that differ in at least one property such as structure, molecular weight, monovalent groups bonded to silicon atoms and content of aliphatically unsaturated groups.

For example, as described above, the (A) organopolysiloxane includes at least one T and or at least one Q siloxy unit. However, the (A) organopolysiloxane may further comprise another organopolysiloxane that may be substantially linear, alternatively is linear. The substantially linear organopolysiloxane may have the average formula: R_{a'}SiO_{(4-a')/2}, where each R and is as defined above, and where subscript a' is selected such that 1.9 ≤ a' ≤ 2.2.

At 25 °C, the substantially linear organopolysiloxane of component (A) may be a flowable liquid or may have the form of an uncured rubber. The substantially linear organopolysiloxane may have a viscosity of from 10 mPa·s to 30,000,000 mPa·s, alternatively from 10 mPa·s to 10,000 mPa·s, alternatively from 100 mPa·s to 1,000,000 mPa·s, and alternatively from 100 mPa·s to 100,000 mPa·s at 25 °C. Viscosity may be measured at 25 °C via a Brookfield LV DV-E viscometer with a spindle selected as appropriate to the viscosity of the substantially linear polyorganosiloxane, i.e., RV-1 to RV-7.

Alternatively, when the (A) organopolysiloxane further comprises another organopolysiloxane that is substantially linear, the substantially linear organopolysiloxane may have the average unit formula:

(R¹¹R¹⁰₂SiO_{1/2})ₐₐ(R¹¹R¹⁰SiO_{2/2})_{bb}(R¹¹₂SiO_{2/2})_{cc}(R¹⁰₃SiO_{1/2})_{dd},

where each R¹⁰ is an independently selected independently selected hydrocarbyl group free of aliphatic unsaturation; each R¹¹ is an independently selected ethylenically unsaturated group; subscript aa is 0, 1, or 2, subscript bb is 0 or more, subscript cc is 1 or more, subscript dd is 0, 1, or 2, with the provisos that a quantity (aa + dd) ≥ 2, and (aa + dd) = 2, with the proviso that a quantity (aa + bb + cc + dd) is 3 to 2,000. Alternatively, subscript cc ≥ 0. Alternatively, subscript bb ≥ 2. Alternatively, the quantity (aa + dd) is 2 to 10, alternatively 2 to 8, and alternatively 2 to 6. Alternatively, subscript cc is 0 to 1,000, alternatively 1 to 500, and alternatively 1 to 200. Alternatively, subscript bb is 2 to 500, alternatively 2 to 200, and alternatively 2 to 100.

The hydrocarbyl group free of aliphatic unsaturation for R¹⁰ is exemplified by an alkyl group of 1 to 6 carbon atoms, an aryl group of 6 to 10 carbon atoms, a halogenated alkyl group of 1 to 6 carbon atoms, a halogenated aryl group of 6 to 10 carbon atoms, an aralkyl group of 7 to 12 carbon atoms or a halogenated aralkyl group of 7 to 12 carbon atoms, where alkyl, aryl, and halogenated alkyl are as described herein. Alternatively, each R¹⁰ is an alkyl group. Alternatively, each R¹⁰ is independently methyl, ethyl or propyl. Each instance of R¹⁰ may be the same or different. Alternatively, each R¹⁰ is a methyl group.

The aliphatically unsaturated monovalent hydrocarbon group for R¹¹ is capable of reacting in a hydrosilylation reaction. Suitable aliphatically unsaturated hydrocarbon groups for R¹¹ are exemplified by an alkenyl group as defined herein and exemplified by vinyl, allyl, butenyl, and hexenyl; and alkynyl groups as defined herein and exemplified by ethynyl and propynyl. Alternatively, each R¹¹ may be vinyl or hexenyl. Alternatively, each R¹¹ is a vinyl group. In certain embodiments, the alkenyl or alkynyl content of the (A) organopolysiloxane may be 0.1% to 1%, alternatively 0.2% to 0.5%, based on the weight of the (A) organopolysiloxane.

When the (A) organopolysiloxane further comprises an organopolysiloxane that is substantially linear, alternatively is linear, the at least two aliphatically unsaturated groups may be bonded to silicon atoms in pendent positions, terminal positions, or in both pendent and terminal locations in the organopolysiloxane that is substantially linear or linear. As a specific example, the (A) organopolysiloxane may further comprise an organopolysiloxane that is substantially linear, alternatively is linear, having the average unit formula:

[(C^{H}3)3SiO_{1/2}]₂[(CH₃)₂SiO_{2/2}]_{cc}[(CH₃)ViSiO_{2/2}]_{bb},

where subscripts bb and cc are defined above, and Vi indicates a vinyl group. With regard to this average formula, any methyl group may be replaced with a different monovalent hydrocarbon group (such as alkyl or aryl), and any vinyl group may be replaced with a different aliphatically unsaturated monovalent hydrocarbon group (such as allyl or hexenyl). Alternatively, as a specific example of the polyorganosiloxane having an average, per molecule, of at least two silicon-bonded aliphatically unsaturated groups, the (A) organopolysiloxane may comprise an organopolysiloxane that is substantially linear, alternatively is linear, having the average formula: Vi(CH₃)₂SiO[(CH₃)₂SiO]_{cc}Si(CH₃)₂Vi, where subscript cc and Vi are defined above. The dimethyl polysiloxane terminated with silicon-bonded vinyl groups may be used alone or in combination with the dimethyl, methyl-vinyl polysiloxane disclosed immediately above as a component of the (A) organopolysiloxane. With regard to this average formula, any methyl group may be replaced with a different monovalent hydrocarbon group, and any vinyl group may be replaced with any terminally aliphatically unsaturated monovalent hydrocarbon group. Because the at least two silicon-bonded aliphatically unsaturated groups may be both pendent and terminal, the (A) organopolysiloxane may alternatively have the average unit formula:

[Vi(CH₃)₂SiO_{1/2}]₂[(CH₃)₂SiO_{2/2}]_{cc}[(CH₃)ViSiO_{2/2}]_{bb},

where subscripts bb and cc and Vi are defined above.

When the (A) organopolysiloxane further comprises the substantially linear polyorganosiloxane, the substantially linear polyorganosiloxane can be exemplified by a dimethylpolysiloxane capped at both molecular terminals with dimethylvinylsiloxy groups, a methylphenylpolysiloxane capped at both molecular terminals with dimethylvinylsiloxy groups, a copolymer of a methylphenylsiloxane and dimethylsiloxane capped at both molecular terminals with dimethylvinylsiloxy groups, a copolymer of a methylvinylsiloxane and a methylphenylsiloxane capped at both molecular terminals with dimethylvinylsiloxy groups, a copolymer of a methylvinylsiloxane and diphenylsiloxane capped at both molecular terminals with dimethylvinylsiloxy groups, a copolymer of a methylvinylsiloxane, methylphenylsiloxane, and dimethylsiloxane capped at both molecular terminals with dimethylvinylsiloxy groups, a copolymer of a methylvinylsiloxane and a methylphenylsiloxane capped at both molecular terminals with trimethylsiloxy groups, a copolymer of a methylvinylsiloxane and diphenylsiloxane capped at both molecular terminals with trimethylsiloxy groups, and a copolymer of a methylvinylsiloxane, methylphenylsiloxane, and a dimethylsiloxane capped at both molecular terminals with trimethylsiloxy groups.

Alternatively, the (A) organopolysiloxane may further comprise a substantially linear, alternatively linear, polyorganosiloxane selected from the group consisting of:
i) dimethylvinylsiloxy-terminated polydimethylsiloxane,
ii) dimethylvinylsiloxy-terminated poly(dimethylsiloxane/methylvinylsiloxane),
iii) dimethylvinylsiloxy-terminated polymethylvinylsiloxane,
iv) trimethylsiloxy-terminated poly(dimethylsiloxane/methylvinylsiloxane),
v) trimethylsiloxy-terminated polymethylvinylsiloxane,
vi) dimethylvinylsiloxy-terminated poly(dimethylsiloxane/methylvinylsiloxane),
vii) dimethylvinylsiloxy-terminated poly(dimethylsiloxane/methylphenylsiloxane),
viii) dimethylvinylsiloxy-terminated poly(dimethylsiloxane/diphenylsiloxane),
ix) phenyl,methyl,vinyl-siloxy-terminated polydimethylsiloxane,
x) dimethylhexenylsiloxy-terminated polydimethylsiloxane,
xi) dimethylhexenylsiloxy-terminated poly(dimethylsiloxane/methylhexenylsiloxane),
xii) dimethylhexenylsiloxy-terminated polymethylhexenylsiloxane,
xiii) trimethylsiloxy-terminated poly(dimethylsiloxane/methylhexenylsiloxane),
xiv) trimethylsiloxy-terminated polymethylhexenylsiloxane
xv) dimethylhexenyl-siloxy terminated poly(dimethylsiloxane/methylhexenylsiloxane),
xvi) dimethylvinylsiloxy-terminated poly(dimethylsiloxane/methylhexenylsiloxane), and
xvii) a combination thereof.

The composition may comprise the (A) organopolysiloxane in an amount of from 60 to 99.5, alternatively from 60 to 98, alternatively from 60 to 95, alternatively from 70 to 95, alternatively from 75 to 95, weight percent based on the total weight of the composition. In one embodiment, the (A) organopolysiloxane consists of the brnahced organopolysiloxane. In other embodiments in which the (A) organopolysiloxane comprises two or more different organopolysiloxanes, e.g. the branched organopolysiloxane and the substantially linear organopolysiloxane, the (A) organopolysiloxane generally comprises the branched organopolysiloxane in an amount of at least 50, alternatively at least 60, alternatively at least 70, alternatively at least 80, alternatively at least 90, weight percent based on the total weight of the (A) organopolysiloxane.

The composition further comprises (B) an organosilicon compound having an average of at least two silicon-bonded hydrogen atoms per molecule. The (B) organosilicon compound may be linear, branched, partly branched, cyclic, resinous (i.e., have a three-dimensional network), or may comprise a combination of different structures. The (B) organosilicon compound is typically a cross-linker, and reacts with the ethylenically unsaturated groups of component (A), when forming a coating, e.g. a release coating. Typically, the (B) organosilicon compound comprises an organohydrogensiloxane.

The (B) organosilicon compound may comprise any combination of M, D, T and/or Q siloxy units, so long as the (B) organosilicon compound includes at least two silicon-bonded hydrogen atoms per molecule. These siloxy units can be combined in various manners to form cyclic, linear, branched and/or resinous (three-dimensional networked) structures. The (B) organosilicon compound may be monomeric, polymeric, oligomeric, linear, branched, cyclic, and/or resinous depending on the selection of M, D, T, and/or Q units.

Because the (B) organosilicon compound includes an average of at least two silicon-bonded hydrogen atoms per molecule, with reference to the siloxy units set forth above, the (B) organosilicon compound may comprise any of the following siloxy units including silicon-bonded hydrogen atoms, optionally in combination with siloxy units which do not include any silicon-bonded hydrogen atoms: (R¹⁰₂HSiO_{1/2}), (R¹⁰H₂SiO_{1/2}), (H₃SiO_{1/2}), (R¹⁰HSiO_{2/2}), (H₂SiO_{2/2}), and/or (HSiO_{3/2}), where each R¹⁰ is independently selected and defined above.

In specific embodiments, the (B) organosilicon compound is a substantially linear, alternatively linear, polyorganohydrogensiloxane. The substantially linear or linear polyorganohydrogensiloxane can have average unit formula: (HR¹⁰₂SiO_{1/2})_{v'}(HR¹⁰SiO_{2/2})_{w'}(R¹⁰₂SiO_{2/2})_{z'}(R¹⁰₃SiO_{1/2})_{y'}, where each R¹⁰ is independently selected and defined above, subscript v' is 0, 1, or 2, subscript w' is 1 or more, subscript z' is 0 or more, subscript y' is 0, 1, or 2, with the provisos that a quantity (v' + y') = 2, and a quantity (v' + w') ≥ 3. A quantity (v' + w' + z' + y') may be 2 to 1,000. The polyorganohydrogensiloxane is exemplified by:
i) dimethylhydrogensiloxy-terminated poly(dimethyl/methylhydrogen)siloxane copolymer,
ii) dimethylhydrogensiloxy-terminated polymethylhydrogensiloxane,
iii) trimethylsiloxy-terminated poly(dimethyl/methylhydrogen)siloxane copolymer,
iv) trimethylsiloxy-terminated polymethylhydrogensiloxane, and/or
v) a combination of two or more of i), ii), iii), iv), and v). Suitable polyorganohydrogensiloxanes are commercially available from Dow Silicones Corporation of Midland, Michigan, USA.

The (B) organosilicon compound may have the formula: H_{y'}R¹⁰_{3-y'}Si-(OSiR¹⁰₂)ₘ-(OSiR¹⁰H)_{m'}-OSiR¹⁰_{3-y'}H_{y'}, where each R¹⁰ is an independently selected hydrocarbyl group free of aliphatic unsaturation, each y' is independently selected from 0 or 1, subscripts m and m' are each independently from 0 to 1,000 with the proviso that m and m' are not simultaneously 0 and m+m' is from 1 to 1,000. In a specific embodiment, each of y' is 0, and subscript m' is ≥ 2.

In one specific embodiment, the (B) organosilicon compound is linear and includes pendent silicon-bonded hydrogen atoms. In these embodiments, the (B) organosilicon compound may be a dimethyl, methyl-hydrogen polysiloxane having the average formula;

(CH₃)₃SiO[(CH₃)₂SiO]_{z'}[(CH₃)HSiO]_{w'}Si(CH₃)₃

where z' and w' are defined above. One of skill in the art understands that in the exemplary formula above the dimethylsiloxy units and methylhydrogensiloxy units may be present in randomized or block form, and that any methyl group may be replaced with any other hydrocarbon group free of aliphatic unsaturation.

In another specific embodiment, the (B) organosilicon compound is linear and includes terminal silicon-bonded hydrogen atoms. In these embodiments, the (B) organosilicon compound may be an SiH terminal dimethyl polysiloxane having the average formula:

H(CH₃)₂SiO[(CH₃)₂SiO]_{z'}Si(CH₃)₂H

where z' is as defined above. The SiH terminal dimethyl polysiloxane may be utilized alone or in combination with the dimethyl, methyl-hydrogen polysiloxane disclosed immediately above. When a mixture is utilized, the relative amount of each organohydrogensiloxane in the mixture may vary. One of skill in the art understands that any methyl group in the exemplary formula above may be replaced with any other hydrocarbon group free of aliphatic unsaturation.

Alternatively still, the (B) organosilicon compound may include both pendent and terminal silicon-bonded hydrogen atoms.

In certain embodiments, the (B) organosilicon compound may comprise an alkylhydrogen cyclosiloxane or an alkylhydrogen dialkyl cyclosiloxane copolymer. Specific examples of suitable organohydrogensiloxanes of this type include (OSiMeH)₄, (OSiMeH)₃(OSiMeC₆H₁₃), (OSiMeH)₂(OSiMeC_{S}H₁₃)₂, and (OSiMeH)(OSiMeC₆H₁₃)₃, where Me represents methyl (-CH₃).

Other examples of suitable organohydrogensiloxanes for the (B) organosilicon compound are those having at least two SiH containing cyclosiloxane rings in one molecule. Such an organohydrogensiloxane may be any organopolysiloxane having at least two cyclosiloxane rings with at least one silicon-bonded hydrogen (SiH) atom on each siloxane ring. Cyclosiloxane rings contain at least three siloxy units (that is, the minimum needed in order to form a siloxane ring), and may be any combination of M, D, T, and/or Q siloxy units that forms a cyclic structure, provided that at least one of the cyclic siloxy units on each siloxane ring contains one SiH unit, which may be an M siloxy unit, a D siloxy unit, and/or a T siloxy unit. These siloxy units can be represented as MH, DH, and TH siloxy units respectively when other substituents are methyl.

In another specific embodiment, the (B) organosilicon compound has the formula: [(HR¹⁰SiO_{2/2})ₐ(-R¹⁰SiO_{3/2})_{b}]_{c}[(R¹⁰₂SiO_{2/2})_{w}]_{d}, where each R¹⁰ is independently selected and defined above, subscript a is from 0 to 10; subscript b is from 1 to 4, with the proviso that (a+b)=3 to 12; 0<c<100; 2≤w≤2,000; and 0<d<100, with the proviso that c>d. Such an organosilicon compound may be referred to as a branched cyclic polyorganohydrogensiloxane compound, which has cyclic SiH-functional branching groups interconnected by linear polydiorganosiloxane segments. An exemplary structure associated with such a branched cyclic polyorganohydrogensiloxane compound is as follows: 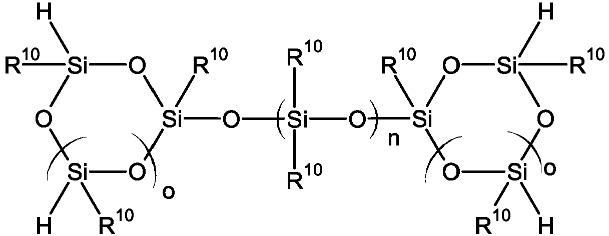 where each R¹⁰ is independently selected and defined above; subscript n is from 2 to 2,000, alternatively from 2 to 1,600, alternatively from 2 to 1,200, alternatively from 2 to 800, alternatively from 2 to 400, alternatively from 2 to 200, alternatively from 2 to 100, alternatively from 2 to 50; and each subscript o is independently from 0 to 9, alternatively from 0 to 8, alternatively from 0 to 6, alternatively from 0 to 4, alternatively from 2 to 4.

Such branched cyclic polyorganohydrogensiloxane compounds are known in the art and can be prepared by, for example, combining together (A) a hydroxyl terminated polydiorganosiloxane and (B) a cyclic polyorganohydrogensiloxane, in the presence of (C) a boron containing Lewis acid.

The (B) organosilicon compound may comprise a combination or two or more different organosilicon compounds that differ in at least one property such as structure, molecular weight, monovalent groups bonded to silicon atoms and content of silicon-bonded hydrogen atoms. The composition may comprise the (B) organosilicon compound in an amount to give a molar ratio of silicon-bonded hydrogen atoms in component (B) to silicon-bonded ethylenically unsaturated groups in component (A) in an amount of from 1:1 to 5:1, alternatively from 1.1:1 to 3.1.

The composition further comprises (C) a hydrosilylation-reaction catalyst. The (C) hydrosilylation-reaction catalyst comprises a metal-ligand complex having the formula MLₓD_{y}, wherein M is a metal; x is equal to the oxidation state of M; each D is independently a neutral coordinating ligand; y is zero or an integer from 1 to 4; and each L is a mono-anionic ligand independently having the formula: 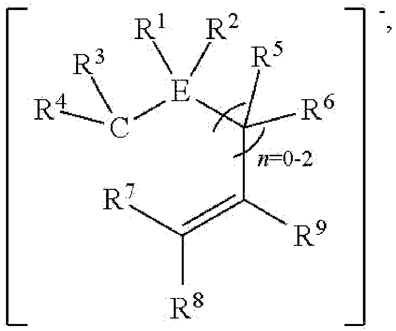 wherein each R¹ and R² is independently a halide or a substituted or unsubstituted group selected from a C₁-C₆ alkyl, a C₃-C₈ cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₈ alkynyl, a C₁-C₆ hydroxyl, a C₃-C₁₀ arylene, a C₃-C₁₀ heteroarylene, a C₂-C₁₀ alkenylene, a C₃-C₁₀ cycloalkenylene, and a C₂-C₁₀ alkynylene, wherein each of R³, R⁴, R⁵, R⁶, R⁷, R⁸, and R⁹ is independently selected from hydrogen, a halide, or a substituted or unsubstituted group selected from a C₁-C₆ alkyl, a C₃-C₈ cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₁₀ alkynyl, a C₁-C₆ hydroxyl, a C₃-C₁₀ arylene, a C₃-C₁₀ heteroarylene, a C₂-C₁₀ alkenylene, a C₃-C₁₀ cycloalkenylene, and a C₂-C₁₀ alkynylene; and wherein E is C or Si.

In certain embodiments, at least one of R¹ and R² is not a fluoride (F-) or a trifluoromethyl (CF₃-) group. In some embodiments of these metal-ligand complexes, at least one of R¹ and R² is not a fluoride or a C₁-C₆ fluoroalkyl. In some embodiments of these metal-ligand complexes, each R¹ and R² is not a fluoride or a trifluoromethyl group. In some embodiments, each R¹ and R² is not a fluoride or a C₁-C₆ fluoroalkyl.

In certain embodiments, M is selected from the group consisting of Li, Be, Mg, Ca, Sr, Ba, Al, Sc, Ga, Sn, Ti, Zr, Hf, V, Nb, Ta, Cr, Mo, W, Mn, Re, Fe, Ru, Os, Co, Rh, Ir, Ni, Pd, Pt, Cu, Ag, Au, Zn, a lanthanide metal, and an actinide metal. In some embodiments of the metal-ligand complexes disclosed herein, M is selected from the group consisting of Li, Be, Mg, Ca, Sr, Ba, Al, Sc, Ga, Sn, Ti, Zr, Hf, V, Nb, Ta, Cr, Mo, W, Mn, Re, Fe, Ru, Os, Rh, Ir, Ni, Pd, Pt, Cu, Ag, Au, Zn, a lanthanide metal, and an actinide metal. In other embodiments of the metal-ligand complexes disclosed herein, M is selected from the group consisting of Li, Mg, Rh, Ir, Pt, Ru, and Os. In specific embodiments of the metal-ligand complexes disclosed herein, M is selected from the group consisting of Pt, Li, Rh, and Ir. In other embodiments, M is selected a platinum group metal selected from Ru, Rh, Pd, Os, Ir, and Pt. In an exemplary embodiment of the metal-ligand complexes disclosed herein, M is Pt. In some embodiments of the metal-ligand complexes disclosed herein, a coordination number of M is 4 or 6. In some embodiments of the metal-ligand complexes disclosed herein, a coordination number of M is 4. In these or other embodiments, M has an oxidation number (also referred to as oxidation state) of at least +2.

In some embodiments of the metal-ligand complexes disclosed herein, L is a η¹,η²-β,β-disubstituted-ω-alkenyl ligand. In some embodiments of the metal-ligand complexes disclosed herein, when x is greater than 1, each L is identical. In some embodiments of the metal-ligand complexes disclosed herein, when x is greater than 1, each L is different from each other L. In some embodiments of the metal-ligand complexes disclosed herein, the total number of carbon atoms in each L excluding R¹, R², R³, R⁴, R⁵, R⁶, R⁷, R⁸, and R⁹ is independently 4 or 5. In some embodiments of the metal-ligand complexes disclosed herein, n is 0 or 1. In some embodiments of the metal-ligand complexes disclosed herein, the total number of carbon atoms in each L excluding functional groups R¹, R², R³, R⁴, R⁵, R⁶, R⁷, R⁸, and R⁹ is 5. In some embodiments of the metal-ligand complexes disclosed herein, n is 1. In some embodiments of the metal-ligand complexes disclosed herein, M is associated with each L via metal-carbon sigma bond and a metal-olefin pi bond. In some embodiments of the metal-ligand complexes disclosed herein, when x is greater than 1, the metal-carbon sigma bonds in said metal-ligand complex are cis with respect to each other. In some embodiments of the metal-ligand complexes disclosed herein, each R¹ and R² is independently selected from the group consisting of a halide and a substituted or unsubstituted group selected from a C₁-C₆alkyl, a C₃-C₈cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₈ alkynyl, or any combination thereof. In some embodiments of the metal-ligand complexes disclosed herein, each of R³, R⁴, R⁵, R⁶, R⁷, R⁸, and R⁹ is independently selected from the group consisting of a hydrogen, a halide, and a substituted or unsubstituted group selected from a C₁-C₆ alkyl, a C₃-C₈ cycloalkyl,a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₈ alkynyl, or any combination thereof. In some embodiments of the metal-ligand complexes disclosed herein, R¹, R², R³, R⁴, R⁵, R⁶, R⁷, R⁸, and R⁹ are directly or indirectly connected to each other via alkyl groups and/or fluoroalkyl groups. In some embodiments of the metal-ligand complexes disclosed herein, R¹, R², R³, R⁴, R⁵, R⁶, R⁷, R⁸, and R⁹ are indirectly connected to each other via alkyl groups and/or fluoroalkyl groups. In some embodiments of the metal-ligand complexes disclosed herein, L is a bidentate ligand.

In some embodiments of the metal-ligand complexes disclosed herein, E is Si. In other embodiments, E is C.

In some embodiments of the metal-ligand complexes disclosed herein, each D independently comprises an ether group (R¹²₂O), an amine group (R¹²₃N), a nitrile group (R¹²CN), an isonitrile group (R¹²NC), a phosphine group (R¹²₃P), a phosphite group ((R¹²O)₃P), an arsine group (R¹²₃As), a stibene group (R¹²₃Sb), a sulfide group (CS), a linear, branched, or cyclic monoalkene, a linear, branched, or cyclic diene, a linear, branched, or cyclic triene, bicyclic alkene, bicyclic dienes bicyclic triene, tricyclic diene, tricyclic triene, alkyne, and any combination thereof; wherein each R¹² is independently selected from the group consisting of a substituted or unsubstituted group selected from a C₁-C₆ alkyl, a C₃-C₈ cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈alkenyl, a C₂-C₈ alkynyl, a C₁-C₆ hydroxyl, a C₃-C₁₀arylene, a C₃-C₁₀ heteroarylene, a C₂-C₁₀ alkenylene, a C₃-C₁₀ cycloalkenylene, a C₂-C₁₀ alkynylene, and any combination thereof. In some embodiments of the metal-ligand complexes disclosed herein, each D is independently selected from the group consisting of a linear mono-ether, a linear polyether, a cyclic monoether, a cyclic polyether, a mono-amine, a linear polyamine, a cyclic monoamines, a cyclic polyamine, and any combination thereof. In specific embodiments, each D is independently selected from the group consisting of 1,5-cyclooctadiene, bicyclo[2.2.1]hepta-2,5-diene, 1,5-hexadiene, ethylene, dibenzo[a,e]cyclooctene, N,N,N',N'-tetramethylethylenediamine, norbornadiene, cyclooctatriene, and cyclooctene. In an exemplary embodiment, each D is 1,5-cyclooctadiene. In other embodiments, D may be a molecule that is otherwise present in the composition for another purpose. By way of example, D may be a solvent molecule, such as acetonitrile, THF, a polyether, etc. As another example, D may be an inhibitor molecule, such as 1-ethynylcyclohexanol. Optional components for the composition as described below, and one of skill in the art readily understands which optional components may be utilized as D based on the description herein.

In some embodiments of the metal-ligand complexes disclosed herein, the metal-ligand complex is a neutral metal-ligand complex. In some embodiments of the metal-ligand complexes disclosed herein y is 0. In some embodiments of the metal-ligand complexes disclosed herein, the metal-ligand complex is selected from the group consisting of (2,2-dimethylpent-4-en-1-yl)lithium, cis-bis(η¹,η²-2,2-dimethylbut-3-en-1-yl)platinum, cis-bis(η¹,η²-2,2-dimethylpent-4-en-1-yl)platinum, cis-bis(η¹,η²-2,2-dimethylhex-5-en-1-yl)platinum,[(1,2,5,6-η)-1,5-cyclooctadiene](η¹,η²-2,2-dimethylpent-4-en-1-yl)iridium,[(1,2,5,6-η)-1,5-cyclooctadiene](η¹,η²-2,2-dimethylpent-4-en-1-yl)rhodium, and [(2,3,5,6-η)-bicyclo[2.2.1]hepta-2,5-diene](η¹,η²-2,2-dimethyl-pent-4-en-1-yl)rhodium

In some embodiments of the metal-ligand complexes disclosed herein, M is a platinum group metal selected from Ru, Rh, Pd, Os, Ir, and Pt, and E is Si. In these or other embodiments, R¹ and R² are independently selected alkyl groups, and each of R³, R⁴, R⁵, R⁶, R⁷, R⁸, and R⁹ is hydrogen. In these or other embodiments, each D is independently 1,5-cyclooctadiene, bicyclo[2.2.1]hepta-2,5-diene, 1,5-hexadiene, ethylene, dibenzo[a,e]cyclooctene, N,N,N',N'-tetramethylethylenediamine, or acetonitrile.

In certain embodiments, the metal-ligand complex of component (C) undergoes two distinct activation steps to hydrosilylate components (A) and (B) and cure the composition to give the release coating. For example, in certain embodiments, component (C) may be an initial catalyst when incorporated into the composition. In these embodiments, subscript y is generally greater than 0 and D is present in the metal-ligand complex. D may be selected to inhibit catalytic activity of M in the metal-ligand complex. Upon the first activation step, D may disassociate from M in the metal-ligand complex, giving a pre-catalyst in which subscript y is 0 and D is absent. In certain embodiments, each L may be bound to M via the ethylenic unsaturation present in each L after disassociation of D. The second activation step is what results in the catalytically active form of M in the composition. In certain embodiments, each activation step occurs without any specific initiation. In other embodiments, each activation step occurs upon exposure to an elevated temperature, e.g. from 50 to 200 °C.

In certain embodiments, component (C) comprises the initial catalyst when incorporated into the composition, where subscript y is 1 and D is 1,5-cyclooctadiene, x is 2 and in each L, M is Pt, E is Si, R¹ and R² are independently selected alkyl groups, and each of R³, R⁴, R⁵, R⁶, R⁷, R⁸, and R⁹ is hydrogen. When R¹ and R² are methyl groups in this embodiment, the initial catalyst has the formula: 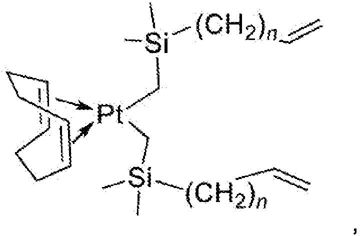 where each subscript n is from 0 to 2.

In these or other embodiments, after disassociation of D to give the precatalyst, i.e., where subscript y is 0, the precatalyst has the formula: 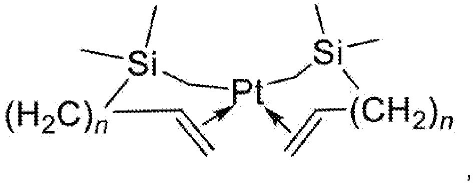 where each subscript n is independently from 0 to 2.

The (C) hydrosilylation-reaction catalyst is present in the composition in a catalytic amount, i.e., an amount or quantity sufficient to promote curing thereof at desired conditions. The hydrosilylation-reaction catalyst can be a single hydrosilylation-reaction catalyst or a mixture comprising two or more different hydrosilylation-reaction catalysts.

The catalytic amount of the (C) hydrosilylation-reaction catalyst may be > 0.01 ppm to 10,000 ppm; alternatively > 1,000 ppm to 5,000 ppm. Alternatively, the typical catalytic amount of the (C) hydrosilylation-reaction catalyst is 0.1 ppm to 5,000 ppm, alternatively 1 ppm to 2,000 ppm, alternatively > 0 to 1,000 ppm. Alternatively, the catalytic amount of (C) hydrosilylation-reaction catalyst may be 0.01 ppm to 1,000 ppm, alternatively 0.01 ppm to 100 ppm, alternatively 20 ppm to 200 ppm, and alternatively 0.01 ppm to 50 ppm of M; based on the total weight of composition.

The composition may further comprise one or more of: (D) an inhibitor, (E) an anchorage additive, (F) an anti-mist additive, (G) a release modifier, and (H) a vehicle.

In certain embodiments, the composition further comprises the (D) inhibitor. The (D) inhibitor may be used for altering the reaction rate or curing rate of the composition, as compared to a composition containing the same starting materials but with the (D) inhibitor omitted. The (D) inhibitor is exemplified by acetylenic alcohols such as methyl butynol, ethynyl cyclohexanol, dimethyl hexynol, and 3,5-dimethyl-1-hexyn-3-ol, 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, and 1-ethynyl-1-cyclohexanol, and a combination thereof; cycloalkenylsiloxanes such as methylvinylcyclosiloxanes exemplified by 1,3,5,7-tetramethyl-1,3,5,7-tetravinylcyclotetrasiloxane, 1,3,5,7-tetramethyl-1,3,5,7-tetrahexenylcyclotetrasiloxane, and a combination thereof; ene-yne compounds such as 3-methyl-3-penten-1-yne, 3,5-dimethyl-3-hexen-1-yne; triazoles such as benzotriazole; phosphines; mercaptans; hydrazines; amines, such as tetramethyl ethylenediamine, dialkyl fumarates, dialkenyl fumarates, dialkoxyalkyl fumarates, maleates such as diallyl maleate; nitriles; ethers; carbon monoxide; alkenes such as cyclo-octadiene, divinyltetramethyldisiloxane; alcohols such as benzyl alcohol; and a combination thereof. Alternatively, the (D) inhibitor may be selected from the group consisting of acetylenic alcohols (e.g., 1-ethynyl-1-cyclohexanol) and maleates (e.g., diallyl maleate, bis maleate, or n-propyl maleate) and a combination of two or more thereof.

Alternatively, the (D) inhibitor may be a silylated acetylenic compound. Without wishing to be bound by theory, it is thought that adding a silylated acetylenic compound reduces yellowing of the reaction product prepared from hydrosilylation reaction of the composition as compared to a reaction product from hydrosilylation of a composition that does not contain a silylated acetylenic compound or that contains an organic acetylenic alcohol inhibitor, such as those described above.

The silylated acetylenic compound is exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. Alternatively, the (D) inhibitor is exemplified by methyl(tris(1,1-dimethyl-2-propynyloxy))silane, ((1,1-dimethyl-2-propynyl)oxy)trimethylsilane, or a combination thereof. The silylated acetylenic compound useful as the (D) inhibitor may be prepared by methods known in the art, such as silylating an acetylenic alcohol described above by reacting it with a chlorosilane in the presence of an acid receptor.

The amount of the (D) inhibitor present in the composition will depend on various factors including the desired bathlife of the composition, whether the composition will be a one part composition or a multiple part composition, the particular inhibitor used, and the selection and amount of components (A)-(C). However, when present, the amount of the (D) inhibitor may be 0% to 1%, alternatively 0% to 5%, alternatively 0.001% to 1%, alternatively 0.01% to 0.5%, and alternatively 0.0025% to 0.025%, based on the total weight of the composition.

Conventional compositions for preparing release coatings generally include Karstedt's catalyst (a platinum complex well known in the art) in combination with inhibitors to extend bathlife and prevent premature cure. However, the combination of Karstedt's catalyst and inhibitor in conventional compositions is known to cause undesirable precipitation and color changes over time, which is undesirable and problematic in the release coating industry as a whole. Precipitation influences performance properties of the release coatings negatively and reduces bathlife. In contrast, component (C) generally does not result in any precipitation or color changes when in the presence of the (D) inhibitor, if utilized. As importantly, though inhibitors are necessarily required along with conventional catalysts, like Karstedt's catalyst, in conventional compositions for preparing release coatings, inhibitors are optional in view of the performance properties attributable to component (C).

In certain embodiments, the composition is free from component (D). In other embodiments, component (D) is present. In specific embodiments, the composition comprises component (D) in an amount to give a molar ratio of component (D) to M in component (C) of from 0 to 20:1, alternatively from 0 to 15:1, alternatively from greater than 0 to 15:1, alternatively from greater than 0 to 12:1, alternatively from greater than 0 to 9:1, alternatively from greater than 0 to 6:1, alternatively from greater than 0 to 3:1, alternatively from greater than 0 to 2:1, alternatively from greater than 1:1 to 10:1, alternatively from greater than 1:1 to 8:1, alternatively from greater than 1:1 to 6:1, alternatively from greater than 1:1 to 4:1, alternatively from greater than 1:1 to 2:1, (D)/M in (C).

In certain embodiments, the composition further comprises the (E) anchorage additive. Suitable anchorage additives are exemplified by a reaction product of a vinyl alkoxysilane and an epoxy-functional alkoxysilane; a reaction product of a vinyl acetoxysilane and epoxy-functional alkoxysilane; and a combination (e.g., physical blend and/or a reaction product) of a polyorganosiloxane having at least one aliphatically unsaturated hydrocarbon group and at least one hydrolyzable group per molecule and an epoxy-functional alkoxysilane (e.g., a combination of a hydroxy-terminated, vinyl functional polydimethylsiloxane with glycidoxypropyltrimethoxysilane). Alternatively, the anchorage additive may comprise a polyorganosilicate resin. Suitable anchorage additives and methods for their preparation are disclosed, for example, in U.S. Patent 9,562,149; U.S. Patent Application Publication Numbers 2003/0088042, 2004/0254274, and 2005/0038188; and European Patent 0 556 023.

Further examples of suitable anchorage additives include a transition metal chelate, a hydrocarbonoxysilane such as an alkoxysilane, a combination of an alkoxysilane and a hydroxy-functional polyorganosiloxane, or a combination thereof. The (E) anchorage additive may be a silane having at least one substituent having an adhesion-promoting group, such as an epoxy, acetoxy or acrylate group. The adhesion-promoting group may additionally or alternatively be any hydrolysable group which does not impact the (C) hydrosilylation-reaction catalyst. Alternatively, the (E) anchorage additive may comprise a partial condensate of such a silane, e.g. an organopolysiloxane having an adhesion-promoting group. Alternatively still, the (E) anchorage additive may comprise a combination of an alkoxysilane and a hydroxy-functional polyorganosiloxane.

Alternatively, the (E) anchorage additive may comprise an unsaturated or epoxy-functional compound. The (E) anchorage additive may comprise an unsaturated or epoxy-functional alkoxysilane. For example, the functional alkoxysilane can include at least one unsaturated organic group or an epoxy-functional organic group. Epoxy-functional organic groups are exemplified by 3-glycidoxypropyl and (epoxycyclohexyl)ethyl. Unsaturated organic groups are exemplified by 3-methacryloyloxypropyl, 3-acryloyloxypropyl, and unsaturated monovalent hydrocarbon groups such as vinyl, allyl, hexenyl, undecylenyl. One specific example of an unsaturated compound is vinyltriacetoxysilane.

Specific examples of suitable epoxy-functional alkoxysilanes include 3-glycidoxypropyltrimethoxysilane, 3-glycidoxypropyltriethoxysilane, (epoxycyclohexyl)ethyldimethoxysilane, (epoxycyclohexyl)ethyldiethoxysilane and combinations thereof. Examples of suitable unsaturated alkoxysilanes include vinyltrimethoxysilane, allyltrimethoxysilane, allyltriethoxysilane, hexenyltrimethoxysilane, undecylenyltrimethoxysilane, 3-methacryloyloxypropyl trimethoxysilane, 3-methacryloyloxypropyl triethoxysilane, 3-acryloyloxypropyl trimethoxysilane, 3-acryloyloxypropyl triethoxysilane, and combinations thereof.

The (E) anchorage additive may also comprise the reaction product or partial reaction product of one or more of these compounds. For example, in a specific embodiment, the (E) anchorage additive may comprise the reaction product or partial reaction product of vinyltriacetoxysilane and 3-glycidoxypropyltrimethoxysilane. Alternatively or in addition, the (E) anchorage additive may comprise alkoxy or alkenyl functional siloxanes.

Alternatively, the (E) anchorage additive may comprise an epoxy-functional siloxane such as a reaction product of a hydroxy-terminated polyorganosiloxane with an epoxy-functional alkoxysilane, as described above, or a physical blend of the hydroxy-terminated polyorganosiloxane with the epoxy-functional alkoxysilane. The (E) anchorage additive may comprise a combination of an epoxy-functional alkoxysilane and an epoxy-functional siloxane. For example, the (E) anchorage additive is exemplified by a mixture of 3-glycidoxypropyltrimethoxysilane and a reaction product of hydroxy-terminated methylvinylsiloxane with 3-glycidoxypropyltrimethoxysilane, or a mixture of 3-glycidoxypropyltrimethoxysilane and a hydroxy-terminated methylvinylsiloxane, or a mixture of 3-glycidoxypropyltrimethoxysilane and a hydroxy-terminated methylvinyl/dimethylsiloxane copolymer.

Alternatively, the (E) anchorage additive may comprise a transition metal chelate. Suitable transition metal chelates include titanates, zirconates such as zirconium acetylacetonate, aluminum chelates such as aluminum acetylacetonate, and combinations thereof. Alternatively, the (E) anchorage additive may comprise a combination of a transition metal chelate with an alkoxysilane, such as a combination of glycidoxypropyltrimethoxysilane with an aluminum chelate or a zirconium chelate.

The particular amount of the (E) anchorage additive present in the composition, if utilized, depends on various factors including the type of substrate and whether a primer is used. In certain embodiments, the (E) anchorage additive is present in the composition in an amount of from 0 to 2 parts by weight, per 100 parts by weight of component (B). Alternatively, the (E) anchorage additive is present in the composition in an amount of from 0.01 to 2 parts by weight, per 100 parts by weight of component (B).

In certain embodiments, the composition further comprises the (F) anti-mist additive. The (F) anti-mist additive may be utilized in the composition to reduce or suppress silicone mist formation in coating processes, particularly with high speed coating equipment. The (F) anti-mist additive may be a reaction product of an organohydrogensilicon compound, an oxyalkylene compound or an organoalkenylsiloxane with at least three silicon bonded alkenyl groups per molecule, and a suitable catalyst. Suitable anti-mist additives are disclosed, for example, in U.S. Patent Application 2011/0287267; U.S. Patent 8,722,153; U.S. Patent 6,586,535; and U.S. Patent 5,625,023.

The amount of the (F) anti-mist additive utilized in the composition will depend on various factors including the amount and type of other starting materials selected for the composition. However, the (F) anti-mist additive is typically utilized in an amount of from 0% to 10%, alternatively 0.1% to 3%, based on the total weight of the composition.

In certain embodiments, the composition further comprises the (G) release modifier, which may be utilized in the composition to control (decrease) the level of release force (the adhesive force between the release coating formed from the composition and an adherend thereto, such as a label including a pressure sensitive adhesive). Release coatings having the required or desired release force can be formulated from a modifier-free composition by adjusting the level or concentration of the (G) release modifier. Examples of suitable release modifiers for component (G) include trimethylsiloxy-terminated dimethyl, phenylmethylsiloxanes. Alternatively, the (G) release modifier may be a condensation reaction product of an organopolysiloxane resin having hydroxyl or alkoxy groups and a diorganopolysiloxane with at least one hydroxyl or hydrolyzable group. Examples of suitable release modifiers are disclosed, for example, in U.S. Patent 8,933,177 and U.S. Patent Application Publication 2016/0053056. When utilized, the (G) release modifier can be present in the composition in an amount of from 0 to 85 parts by weight, alternatively 25 to 85 parts, per 100 parts of component (A).

In certain embodiments, the composition further comprises the (H) vehicle. The (H) vehicle typically solubilizes the components of the composition and, if the components solubilize, the (H) vehicle may be referred to as a solvent. Suitable vehicles include silicones, both linear and cyclic, organic oils, organic solvents and mixtures of these.

Typically, the (H) vehicle, if present in the composition, is an organic liquid. Organic liquids includes those considered oils or solvents. The organic liquids are exemplified by, but not limited to, aromatic hydrocarbons, aliphatic hydrocarbons, alcohols having more than 3 carbon atoms, aldehydes, ketones, amines, esters, ethers, glycols, glycol ethers, alkyl halides and aromatic halides. Hydrocarbons include isododecane, isohexadecane, Isopar L (C11-C13), Isopar H(C11-C12), hydrogentated polydecene, aromatic hydrocarbons, and halogenated hydrocarbons. Ethers and esters include isodecyl neopentanoate, neopentylglycol heptanoate, glycol distearate, dicaprylyl carbonate, diethylhexyl carbonate, propylene glycol n-butyl ether, ethyl-3 ethoxypropionate, propylene glycol methyl ether acetate, tridecyl neopentanoate, propylene glycol methylether acetate (PGMEA), propylene glycol methylether (PGME), octyldodecyl neopentanoate, diisobutyl adipate, diisopropyl adipate, propylene glycol dicaprylate/dicaprate, octyl ether, and octyl palmitate. Additional organic fluids suitable as a stand-alone compound or as an ingredient to the (H) vehicle include fats, oils, fatty acids, and fatty alcohols. The (H) vehicle may also be a low viscosity organopolysiloxane or a volatile methyl siloxane or a volatile ethyl siloxane or a volatile methyl ethyl siloxane having a viscosity at 25 °C in the range of 1 to 1,000 mm²/sec, such as hexamethylcyclotrisiloxane, octamethylcyclotetrasiloxane, decamethylcyclopentasiloxane, dodecamethylcyclohexasiloxane, octamethyltrisiloxane, decamethyltetrasiloxane, dodecamethylpentasiloxane, tetradecamethylhexasiloxane, hexadeamethylheptasiloxane, heptamethyl-3-{(trimethylsilyl)oxy)}trisiloxane, hexamethyl-3,3, bis{(trimethylsilyl)oxy}trisiloxane pentamethyl{(trimethylsilyl)oxy}cyclotrisiloxane as well as polydimethylsiloxanes, polyethylsiloxanes, polymethylethylsiloxanes, polymethylphenylsiloxanes, polydiphenylsiloxanes, caprylyl methicone, and any mixtures thereof.

In specific embodiments, the (H) vehicle is selected from polyalkylsiloxanes; tetrahydrofuran; mineral spirits; naphtha; an alcohol such as methanol, ethanol, isopropanol, butanol, or n-propanol; a ketone such as acetone, methylethyl ketone, or methyl isobutyl ketone; an aromatic hydrocarbon such as benzene, toluene, or xylene; an aliphatic hydrocarbon such as heptane, hexane, or octane; a glycol ether such as propylene glycol methyl ether, dipropylene glycol methyl ether, propylene glycol n-butyl ether, propylene glycol n-propyl ether, or ethylene glycol n-butyl ether; or a combination thereof.

The amount of the (H) vehicle will depend on various factors including the type of vehicle selected and the amount and type of other components present in the composition. However, the amount of the (H) vehicle in the composition may be from 0% to 99%, alternatively 2% to 50%, based on the total weight of the composition. The (H) vehicle may be added during preparation of the composition, for example, to aid mixing and delivery. All or a portion of the (H) vehicle may optionally be removed after the composition is prepared, including prior to and/or contemporaneous with preparing the release coating from the composition. In certain embodiments, the composition is free from the (H) vehicle, and the composition is solventless and free from solvents and vehicles, including organic solvents.

Other optional components may be present in the composition, including, for example, reactive diluents, fragrances, preservatives, colorants, dyes, pigments, anti-oxidants, heat stabilizers, flame retardants, flow control additives, biocides, fillers (including extending and reinforcing fillers), surfactants, thixotroping agents, pH buffers, etc. The composition may be in any form and may be incorporated into further compositions.

Alternatively, the composition and release coating formed therefrom may be free of particulates or contains only a limited amount of particulate (*e.g*., filler and/or pigment), such as 0 to 30% by weight of the composition. Particulates can agglomerate or otherwise stick to the coater equipment used to form the release coating. In addition, particulates can hinder optical properties, for example transparency, of the release coating and of the release liner formed therewith, if optical transparency is desired. The particulates may be prejudicial to the adherence of an adherend.

In certain embodiments, the composition is free from fluoroorganosilicone compounds. It is believed that, during the cure, a fluorocompound, because of its low surface tension, may rapidly migrate to the interface of the composition or the release coating formed therewith and a substrate on which the composition is applied and the release coating is formed, for example a composition/PET film interface. Such migration may prevent adherence of the release coating (prepared by curing the composition) to the substrate by making a fluorine containing barrier. By making a barrier, the fluoroorganosilicone compounds may prevent any component of the composition from reacting at the interface, impacting curing and related properties. Moreover, fluoroorganosilicone compounds are usually expensive.

The composition in its curable form may be prepared by combining components (A)-(C), as well as any optional components, described above, in any order of addition, optionally with a master batch, and optionally under shear. As described in greater detail below, the composition may be a one part composition, a two component or 2K composition, or a multi-part composition. For example, components (A), (B), and (C) may be present in the same or different parts until formation of a bath to prepare release coatings.

In certain embodiments, the composition has a bathlife of 10, alternatively 20, alternatively 30, alternatively 40 minutes at 40 °C. In specific embodiments, the composition has such a bathlife even in the absence of any (D) inhibitor. Bathlife is the time it takes for the viscosity of the composition to double at 40 °C, and is thus indicative of stability. Longer bathlife is indicative of better coating performance. As understood in the art, viscosity can be measured via a suitable viscometer, e.g. a Brookfield DV2TLV viscometer, continuously at 40 °C. Conventional compositions for preparing release coatings can generally only achieve such a bathlife with significant concentrations of inhibitor(s).

A method of preparing a coated substrate with the composition comprises applying, i.e., disposing, the composition on the substrate. The method further comprises curing the composition on the substrate, which results in the formation of the release coating on the substrate to give the coated substrate. Curing may be performed by heating at an elevated temperature, e.g., 50°C to 200°C, alternatively 50°C to 180°C, and alternatively 50°C to 160°C, to give the coated substrate. One skilled in the art would be able to select an appropriate temperature depending on various factors including the selection of the components in the composition and the substrate composition or material of construction.

The composition may be disposed or dispensed on the substrate in any suitable manner. Typically, the composition is applied in wet form via a wet coating technique. The composition may be applied by i) spin coating; ii) brush coating; iii) drop coating; iv) spray coating; v) dip coating; vi) roll coating; vii) flow coating; viii) slot coating; ix) gravure coating; x) Meyer bar coating; or xi) a combination of any two or more of i) to x). Typically, disposing the composition on the substrate results in a wet deposit on the substrate, which is subsequently cured to give the coated substrate, which comprises a cured film, i.e., the release coating, formed from the composition on the substrate.

The substrate is not limited and may be any substrate. The release coating may be separable from the substrate or may be physically and/or chemically bonded to the substrate depending on its selection. The substrate may have an integrated hot plate or an integrated or stand-alone furnace for curing the wet deposit. The substrate may optionally have a continuous or non-continuous shape, size, dimension, surface roughness, and other characteristics. Alternatively, the substrate may have a softening point temperature at the elevated temperature. However, the composition and method are not so limited.

Alternatively, the substrate may comprise a plastic, which maybe a thermosetting and/or thermoplastic. However, the substrate may alternatively be or comprise glass, metal, cellulose (e.g. paper), wood, cardboard, paperboard, a silicone, or polymeric materials, or a combination thereof.

Specific examples of suitable substrates include paper substrates such as Kraft paper, polyethylene coated Kraft paper (PEK coated paper), thermal paper, and regular papers; polymeric substrates such polyamides (PA); polyesters such as polyethylene terephthalates (PET), polybutylene terephthalates (PET), polytrimethylene terephthalates (PTT), polyethylene naphthalates (PEN), and liquid crystalline polyesters; polyolefins such as polyethylenes (PE), polypropylenes (PP), and polybutylenes; styrenic resins; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones; polyvinyl alcohols (PVA); polyetheretherketones (PEEK); polyetherketoneketones (PEKK); polyarylates (PAR); polyethernitriles (PEN); phenolic resins; phenoxy resins; celluloses such as triacetylcellulose, diacetylcellulose, and cellophane; fluorinated resins, such as polytetrafluoroethylenes; thermoplastic elastomers, such as polystyrene types, polyolefin types, polyurethane types, polyester types, polyamide types, polybutadiene types, polyisoprene types, and fluoro types; and copolymers, and combinations thereof.

The composition, or wet deposit, is typically cured at the elevated temperature for a period of time. The period of time is typically sufficient to effect curing, *i.e.,* cross-linking, of the composition. The period of time may be from greater than 0 to 8 hours, alternatively from greater than 0 to 2 hours, alternatively from greater than 0 to 1 hour, alternatively from greater than 0 to 30 minutes, alternatively from greater than 0 to 15 minutes, alternatively from greater than 0 to 10 minutes, alternatively from greater than 0 to 5 minutes, alternatively from greater than 0 to 2 minutes, alternatively from greater than 0 to 1 minute, alternatively from greater than 0 to 50 seconds, alternatively from greater than 0 to 40 seconds, alternatively from greater than 0 to 30 seconds, alternatively from greater than 0 to 20 seconds, alternatively from greater than 0 to 10 seconds, alternatively from greater than 0 to 5 seconds. The period of time depends on various factors including on the elevated temperature is utilized, the temperature selected, desired release coating thickness, and the presence of absence of any vehicle in the composition.

Curing the composition typically has a dwell time of from 0.1 second to 50 seconds, alternatively from 0.5 second to 30 seconds, alternatively from 1 second to 10 seconds. Dwell time selected may depend on the substrate selection, temperature selected, and line speed. Dwell time, as used herein, refers to the time during which the composition, or wet deposit, is subjected to the elevated temperature. Dwell time is distinguished from cure time, as there may be ongoing curing even after the composition, wet deposit, or partially cured reaction intermediary thereof is no longer subjected to the elevated temperature, which typically initiates curing. Alternatively, the coated substrate may be prepared on a conveyor belt in an oven, and the dwell time may be calculated by dividing a length of the oven (*e.g.* in meters) by a line speed of the conveyor belt (*e.g.* in meters/sec). In some embodiments, the dwell time may be equivalent to the period of time in which the composition, or wet deposit, is cured.

The period of time may be broken down into cure iterations, *e.g.* a first-cure and a post-cure, with the first-cure being, for example, one hour and the post cure being, for example, three hours. The elevated temperature may be independently selected from any temperature above room temperature in such iterations, and may be the same in each iteration.

Depending on the optional presence and selection of the (H) vehicle, curing the composition may also include the step of drying. For example, when the composition comprises the (H) vehicle, the step of curing typically also removes drying, volatilizing, or removing the (H) vehicle from the composition. Drying may be contemporaneous with curing or may be separate from curing.

Depending on a thickness and other dimensions of the release coating and coated substrate, the coated substrate can be formed via an iterative process. For example, a first deposit may be formed and subjected to a first elevated temperature for a first period of time to give a partially cured deposit. Then, a second deposit may be disposed on the partially cured deposit and subjected to a second elevated temperature for a second period of time to give a second partially cured deposit. The partially cured deposit will also further cure during exposure to the second elevated temperature for the second period of time. A third deposit may be disposed on the second partially cured deposit and subjected to a third elevated temperature for a third period of time to give a third partially cured deposit. The second partially cured deposit will also further cure during exposure to the second elevated temperature for the second period of time. This process may be repeated, for example, from 1 to 50 times, to build the coated substrate as desired. A composite is of partially cured layers may be subjected to a final post-cure, *e.g.* at the elevated temperature and period of time above. Each elevated temperature and period of time may be independently selected and may be the same as or different from one another. When the coated substrate is formed via the iterative process, each deposit may also be independently selected and may differ in terms of components selected in the composition, their amounts, or both. Alternatively still, each iterative layer may be fully cured, rather than only being partially cured, in such an iterative process.

Alternatively, each deposit may comprise or be a wet film. Alternatively, the iterative process may be wet-on-wet, depending on a cure state of the partially cured layer. Alternatively, the iterative process may be wet-on-dry.

The coated substrate, which comprises the release coating formed from the composition on the substrate, may have varying dimensions, including relative thicknesses of the release coating and the substrate. The release coating has a thickness that may vary depending upon its end use application. The release coating may have a thickness of greater than 0 to 4,000 µm, alternatively greater than 0 to 3,000 µm, alternatively greater than 0 to 2,000 µm, alternatively greater than 0 to 1,000 µm, alternatively greater than 0 to 500 µm, alternatively greater than 0 to 250 µm. However, other thicknesses are contemplated, *e.g.* 0.1 to 200 µm. For example, the thickness of the release coating may be 0.2 to 175 µm; alternatively 0.5 to 150 µm; alternatively 0.75 to 100 µm; alternatively 1 to 75 µm; alternatively 2 to 60 µm; alternatively 3 to 50 µm; and alternatively 4 to 40 µm. Alternatively, when the substrate is plastic, the release coating may have a thickness of greater than 0 to 200, alternatively greater than 0 to 150 µm, and alternatively greater than 0 to 100 µm.

If desired, the release coating may be subjected to further processing depending upon its end use application. For example, the release coating may be subjected to oxide deposition (*e.g.* SiO₂ deposition), resist deposition and patterning, etching, chemical, corona, or plasma stripping, metallization, or metal deposition. Such further processing techniques are generally known. Such deposition may be chemical vapor deposition (including low-pressure chemical vapor deposition, plasma-enhanced chemical vapor deposition, and plasma-assisted chemical vapor deposition), physical vapor deposition, or other vacuum deposition techniques. Many such further processing techniques involve elevated temperatures, particularly vacuum deposition, for which the release coating is well suited in view of its excellent thermal stability. Depending on an end use of the release coating, however, the release coating may be utilized with such further processing.

The coated substrate may be utilized in diverse end use applications. For example, the coated substrate may be utilized in coating applications, packaging applications, adhesive applications, fiber applications, fabric or textile applications, construction applications, transportation applications, electronics applications, or electrical applications. However, the composition may be utilized in end use applications other than preparing the coated substrate, *e.g.* in the preparation of articles, such as silicone rubbers.

Alternatively, the coated substrate may be utilized as a release liner, *e.g.* for a tape or adhesive, including any pressure-sensitive adhesives, including acrylic resin-type pressure-sensitive adhesives, rubber-type pressure-sensitive adhesives, and silicone-type pressure-sensitive adhesives, as well as acrylic resin-type adhesives, synthetic rubber-type adhesives, silicone-type adhesives, epoxy resin-type adhesives, and polyurethane-type adhesives. Each major surface of the substrate may having a release coating disposed thereon for double sided tapes or adhesives.

Alternatively, when the composition will be formulated to prepare a release coating, the composition may be prepared by mixing the components together, for example, to prepare a one part composition. However, it may be desirable to prepare the composition as a multiple part composition, in which components having SiH functionality (*e.g.,* the (B) organosilicon compound) and the (C) hydrosilylation-reaction catalyst are stored in separate parts, until the parts are combined at the time of use (*e.g.,* shortly before application to a substrate).

For example, a multiple part curable composition may comprise:
Part (A), a base part comprising the (A) organopolysiloxane including an average of at least two silicon-bonded ethylenically unsaturated groups per molecule, and (C) the hydrosilylation-reaction catalyst, and optionally when present, one or more of optional components (E)-(H), and
Part (B), a curing agent part comprising the (B) organosilicon compound having an average, per molecule, of at least two silicon bonded hydrogen atoms per molecule, and optionally when present, one or more of optional components (E)-(H). Part (A) and Part (B) may be provided in a kit with instructions, *e.g.,* for how to combine the parts to prepare the composition, how to apply the composition to a substrate, and how to cure the composition.

As described above, the composition can for example be applied to the substrate by any convenient means such as spraying, doctor blade, dipping, screen printing or by a roll coater, e.g. an offset web coater, kiss coater or etched cylinder coater.

The composition of the invention can be applied to any substrate, such as those described above. Alternatively, the composition may be applied to polymer film substrates, for example polyester, particularly polyethylene terephthalate (PET), polyethylene, polypropylene, or polystyrene films. The composition can alternatively be applied to a paper substrate, including plastic coated paper, for example paper coated with polyethylene, glassine, super calender paper, or clay coated kraft. The composition can alternatively be applied to a metal foil substrate, for example aluminum foil.

In certain embodiments, the method of preparing the coated substrate may further comprise treating the substrate before applying or disposing the composition on the substrate. Treating the substrate may be performed by any convenient means such as a plasma treatment or a corona discharge treatment. Alternatively, the substrate may be treated by applying a primer. In certain instances, anchorage of the release coating may be improved if the substrate is treated before forming the release coating thereon from the composition.

When the composition includes the (H) vehicle, the method may further comprise removing the (H) vehicle, which may be performed by any conventional means, such as heating at 50°C to 100°C for a time sufficient to remove all or a portion of the (H) vehicle. The method may further comprise curing the composition to form the release coating on a surface of the substrate. Curing may be performed by any conventional means such as heating at 100°C to 200°C.

Under production coater conditions, cure can be effected in a residence time of 1 second to 6 seconds, alternatively 1.5 seconds to 3 seconds, at an air temperature of 120°C to 150°C. Heating can be performed in an oven, e.g., an air circulation oven or tunnel furnace or by passing the substrate including the wet deposit disposed thereon around heated cylinders.

The following examples are intended to illustrate the invention and are not to be viewed in any way as limiting to the scope of the invention.

The following units can be converted as such: 1 mil = 0.0254 mm; 1 lbs = 0,453592 kg).

Certain components utilized in the Examples are set forth in Table 1 below.

**Table 1: Components/Compounds Utilized**

| Abbreviation | Meaning/ Definition |
|---|---|
| Organopolysiloxane (A1) | Vinyl end-blocked Q-branched polymer of formula: |
| | M^{Vi}₄D₁₆₀Q, having one Q siloxy unit |
| Organopolysiloxane (A2) | Vinyl end-blocked Q-branched polymer of formula: |
| | M^{Vi}₄D₁₂₀Q, having one Q siloxy unit |
| Organopolysiloxane (A3) | Vinyl end-blocked Q-branched polymer having pendant vinyl groups and formula M^{Vi}₄D^{Vi}_{1.8}D₁₆₈Q, with one Q siloxy unit |
| Organopolysiloxane (A4) | Vinyl end-blocked Q-branched polymer having pendant vinyl groups and formula M^{Vi}_{2.8} M_{1.2}D^{Vi}_{1.8}D₁₃₁Q, with one Q siloxy unit |
| Organopolysiloxane (A5) | Vinyl-functional organopolysiloxane of average formula M^{CH2CH2}_{0.71n}M^{Vi}_{1.29n}M^{OZ}_{0.13n}D_{3252.43n}Qₙ, as prepared in Preparation Example 1 of Intl. PCT Publ. No. WO2021113058A1, where n>1 such that Component (A5) includes more than one Q siloxy unit, and where Z is independently alkyl or H |
| | |
| Organosilicon Compound (B1) | Dumbbell-shaped compound of formula: |
| | 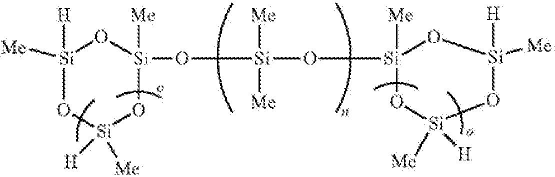 |
| | where n=10 and each o is from 2-4. |
| Organosilicon Compound (B2) | Trimethylsiloxy-endblocked dimethyl methylhydrogen copolymer of formula MD₁₈D^{H}₄₂M |
| Release Modifier | Physical blend formed by removing toluene from a mixture of M₄₁M^{Vi}₅Q₅₄ in toluene (70 wt.%), Q-(D₅M^{Vi})₄, and Inhibitor in a wt./wt./wt. ratio of 41.3/58.5/0.2 |
| Base Composition 1 | Blend of 2 wt.% Organopolysiloxane (A5), 3 wt.% Organopolysiloxane (A2), 47.46 wt.% Organopolysiloxane (A3), 47.46 wt.% Organopolysiloxane (A4), and 0.09 wt.% Inhibitor |
| Base Composition 2 | Same as Additive Composition 1 with the same relative amounts of components, but without any Inhibitor |
| Base Composition 3 | Mixture of Organopolysiloxane (A1) (99.75 wt.%) and Inhibitor (0.25 wt.%) |
| Conventional Catalyst Blend | Blend of Karstedt's catalyst (K catalyst) with M^{Vi}D₁₃₉M^{Vi}, M^{Vi}D₁₁₀M^{Vi}, and M^{Vi}M^{Vi} (at a wt./wt./wt./wt. ratio of 0.46/18.38/80/1.16) |
| Catalyst | 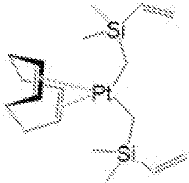 |
| Inventive Catalyst Blend | Blend of Catalyst, M^{Vi}D₁₃₉M^{Vi}, M^{Vi}D₁₁₀M^{Vi}, and M^{Vi}M^{Vi} (at a wt./wt./wt./wt. ratio of 0.28/18.43/80.22/1.16) |
| Inhibitor | Ethynyl cyclohexanol (ETCH) |

### General Procedure 1: Examples 1-4 and Comparative Examples 1-4

Examples 1-4 and Comparative Examples 1-4 followed General Procedure 1 to prepare compositions for preparing release coatings. The particular amounts of each component utilized in the compositions of Examples 1-4 and Comparative Examples 1-4 are detailed below in Tables 2 and 3.

In General Procedure 1, all of the components for each of Examples 1-4 and Comparative Examples 1-4 except for the Inventive Catalyst Blend or Conventional Catalyst Blend, as the case may be, and mixed via a dental mixer for 1 minute at 3500 revolutions per minute (rpm) to give a mixture. Then, the Inventive Catalyst Blend or Conventional Catalyst Blend, as the case may be, was disposed in the mixture to give a composition, and the composition was mixed via the dental mixture for 1 minute at 3500 rpm. In all of the compositions of Examples 1-4 and Comparative Examples 1-4, the content of platinum was the same at 93 ppm, and the total ratio of silicon-bonded hydrogen atoms to silicon-bonded vinyl groups was the same at 2/1 mol/mol (SiH to SiVi). In Table 3, C.E. indicates Comparative Example. In these Examples, reference to platinum or metal content is with regard to the platinum or metal itself, and not any ligands present in a complex.

**Table 2: Examples 1-4**

| Component | Ex. 1 | Ex. 2 | Ex. 3 | Ex. 4 |
|---|---|---|---|---|
| Base Composition 2 (g) | 32.54 | 32.54 | 21.83 | 24.85 |
| (B1) (g) | 4.02 | 4.02 | 5.35 | 0 |
| (B2) (g) | 0 | 0 | 0 | 2.49 |
| Inhibitor (g) | 0 | 0.004 | 0.004 | 0 |
| Inventive Catalyst Blend (g) | 3.46 | 3.46 | 3.46 | 2.60 |
| Release Modifier (g) | 0 | 0 | 9.36 | 0 |
| Inhibitor/Pt mole ratio | 0 | 1.68 | 9.56 | 0 |

**Table 3: Comparative Examples 1-4**

| Component | C.E. 1 | C.E. 2 | C.E. 3 | C.E. 4 |
|---|---|---|---|---|
| Base Composition 1 (g) | 32.54 | 0 | 0 | 0 |
| Base Composition 2 (g) | 0 | 32.54 | 32.54 | 24.90 |
| (B1) (g) | 4.02 | 4.02 | 4.02 | 0 |
| (B2) (g) | 0 | 0 | 0 | 2.49 |
| Inhibitor (g) | 0 | 0.004 | 0 | 0 |
| Conventional Catalyst Blend (g) | 3.46 | 3.46 | 3.46 | 2.60 |
| Inhibitor/Pt mole ratio | 12.78 | 1.68 | 0 | 0 |

The compositions of Examples 1-4 and Comparative Examples 1-4 were analyzed for bathlife. Compositions for release coatings are generally formulated into a bath, and it's desirable to maximize bathlife to prevent premature curing of the composition during the working process. Bathlife can be extended via conventional means, such as incorporating an inhibitor into a composition, but such conventional means also inhibit curing at the same time. However, though it's desirable to maximize bathlife, it's also desirable to minimize cure time and a temperature at which a composition cures, as described below. Generally, it's difficult to both extend bathlife while providing desirable (low) cure temperatures and associated shorter cure times.

Bulk bathlife test: Each composition was tested on a Brookfield DV2TLV viscometer continuously at the designated temperature (either 23 or 40 °C). Bulk bathlife is the time it takes for the viscosity of the composition to double at the designated temperature. Longer bulk bathlife is indicative of better coating performance.

Thin-film bathlife: Each composition was applied via a 2 mil Bird Bar on a 2 mil thick polyethylene terephthalate (PET) film on a flat platform to give a wet coating on the PET film. The thin film bathlife is the time required for the wet coating to gel at room temperature. Gelling was measured via a finger test method to check the wet coating on the PET film every 1 minute for the first 5 minutes, and every 5 min afterward. The time requires for the wet coating to change from a smear (where the wet coating was completely liquid, and could level itself after a finger scratch) to a smudge (where the wet coating couldn't level itself after a finger scratch) or cure (where the wet coating became fully solid) is reported as the thin film bathlife. Longer thin film bathlife is indicative of better the coating performance.

Tables 4 and 5 show the bulk bathlife and thin-film bathlife for the compositions of Examples 1-4 and Comparative Examples 1-4. In Table 5, TSTT means "too short to be tested," meaning that the bulk bathlife or thin-film bathlife was <1 min, which is particularly undesirable and completely unacceptable in the industrial liner production process due to gelation undesirably influencing the coater and coater rolls.

**Table 4: Bathlife of the Compositions of Examples 1-4**

| Test: | Ex. 1 | Ex. 2 | Ex. 3 | Ex. 4 |
|---|---|---|---|---|
| Thin film bathlife (mins) | 236 | 240 | >240 | NA |
| Bulk bathlife at 40°C (mins) | 28 | 98 | 395 | 13 |
| Bulk bathlife at 23°C (mins) | 152 | 731 | NA | 48 |

**Table 5: Bathlife of the Compositions of Comparative Examples 1-4**

| Test: | C.E. 1 | C.E. 2 | C.E. 3 | C.E. 4 |
|---|---|---|---|---|
| Thin film bathlife (mins) | 45 | TSTT | TSTT | TSTT |
| Bulk bathlife at 40°C (mins) | 103 | TSTT | TSTT | TSTT |
| Bulk bathlife at 23°C (mins) | 716 | TSTT | TSTT | TSTT |

As shown by the Examples above, when compositions based on the Conventional Catalyst Blend and the Catalyst have the same Inhibitor/Pt molar ratio, for example in Example 2vs. C.E. 2, the Catalyst gave Example 2 a 240 min thin film bathlife, and 98/731 mins 40°C/23°C bulk bathlife. In contrast, the Conventional Catalyst Blend gave C.E. 2 a thin film bathlife and a 40°C/23°C bulk bathlife that was too short to be tested. Though C.E. 1 had a thin film bathlife and bulk bathlife that could be tested, C.E. 1 had an Inhibitor/Pt mole ratio more than 700% higher than C.E. 2, whereas Inhibitor is not required in the compositions including the Catalyst (e.g. as in Examples 1 and 4).

The compositions of Examples 2 and 3 and Comparative Example 1 were utilized to prepare coated substrates. Physical properties were measured as described below.

### Cure Performance: Extractable Percentage

Cure performance of a particular composition was evaluated by determining an extractable percent value (extractable %). In particular, to measure extractable %, each composition was coated and cured on a substrate (Glassine paper) to form a coated substrate, which was immediately cut into three sample discs (die cutter, 1.375 inch (3.49 cm)) handled only by tweezers to minimize contamination and/or damage. The coated substrate includes a release coating formed by curing each composition on the substrate. Each sample disc was analyzed via X-Ray Fluorescence (XRF) to determine an initial coat weight (Wⁱₛ) before being placed in an individual bottle (100-mL, covered with a lid) containing solvent (methyl isobutyl ketone, 40 mL) and allowed to rest on a bench to soak for 30 minutes. XRF was conducted on an Rigaku NEX QC+ QC1499 XRF analyzer. Each sample disc was then removed from the bottle, placed coated-side-up on a clean surface (tissue paper) to allow residual solvent to evaporate (without blotting/wiping), and analyzed via XRF to determine a final coat weight (W^{f}ₛ). The extractable % of each release coating is the percent change in coat weight from the solvent soak, i.e., is calculated using the formula: [(Wⁱₛ - W^{f}ₛ) / Wi] x 100%). The extractable % indicates the amount of non-cured components of the composition (e.g. non-crosslinked silicone) extractable from the release coating of the coated substrate. A lower extractable % indicates a higher/better cure performance.

### Cure Performance: Anchorage (ROR%)

The anchorage of a particular composition was evaluated via anchorage index, i.e., by determining a percent rub-off resistance (ROR%) value. In particular, each composition was coated and cured on a substrate (Glassine paper) to form a coated substrate. Immediately following cure, the coated substrate was cut into two sample discs (die cutter, 1.375 inch (3.49 cm)), which are each analyzed via XRF to determine an initial coat weight (Wⁱₐ). Each sample disc is then abraded with a felt under load (1.9 kg) using automated abrading equipment, in a method similar to a Taber-type abrasion test (e.g. such as that of ASTM D4060-19, "Standard Test Method for Abrasion Resistance of Organic Coatings by the Taber Abraser"), and subsequently analyzed via XRF to determine a final coat weight (W^{f}ₐ). The ROR% of each sample is calculated using the formula: [W^{f}ₛ / Wⁱₛ] x 100%). The ROR% indicates how strong a particular release coating is anchored to the substrate, such that a higher ROR% indicates a higher/better anchorage. The ROR% was also measured after aging each coated substrate at room temperature (RT) for one month.

Table 6 below shows the extractable %, ROR%, and 1 month aged at RT ROR% for the release coatings formed with the compositions of Comparative Example 1 and Examples 2 and 3. In column 1, the cure conditions relate to the oven temperature (either 180 °C or 160 °C), and the dwell time (either 6 s or 3 s).

**Table 6: Cure Performance**

| Cure conditions | Property: | C.E. 1 | Ex. 2 | Ex. 3 |
|---|---|---|---|---|
| 180°C/6s | Extractable% | 0.41 | 0.41 | 1.53 |
| | ROR% | 98.81 | 98.75 | 99.40 |
| | 1 month RT aged ROR% | 97.83 | 95.94 | 96.30 |
| 180°C/3s | Extractable% | 0.00 | 0.78 | 0.00 |
| | ROR% | 97.74 | 98.85 | 96.43 |
| | 1 month RT aged ROR% | 95.51 | 95.37 | 97.44 |
| 160°C/6s | Extractable% | 0.00 | 0.00 | 0.40 |
| | ROR% | 98.82 | 99.38 | 97.10 |
| | 1 month RT aged ROR% | 95.06 | 98.03 | 96.88 |
| 160°C/3s | Extractable% | 1.17 | 3.34 | 2.05 |
| | ROR% | 96.47 | 96.15 | 93.16 |
| | 1 month RT aged ROR% | 98.77 | 94.58 | 95.52 |

In addition to Extractable% and ROR%, release force of the release coatings formed with the compositions of Comparative Example 1 and Examples 2 and 3 was measured. The coated substrates were laminated with Tesa 7475 tape and aged under 40 Ibs weight at RT and 50% RH for 7 days and 1 month. The coated substrate was then peeled from the tape at various speeds, namely at 0.3 m/min (MPM), 10 m/min (MPM), 100 m/min (MPM), and 300 m/min (MPM), at 180 degree peeling. Release force was measured via an Imass SP-2100 and ZPE-1100W release test system. The release force was measured for release coatings cured at different cure conditions. The cure conditions relate to the oven temperature (either 180 °C or 160 °C), and the dwell time (either 6 s or 3 s) The values for the 7 day aged release force and 1 month aged release force are set forth below in Tables 7-10.

**Table 7: 7 Day Aged Release Force**

| Oven Temperature | 160 °C | | | | | |
|---|---|---|---|---|---|---|
| Dwell Time (s) | 6 | | | 3 | | |
| Example: | C.E. 1 | Ex. 2 | Ex. 3 | C.E. 1 | Ex. 2 | Ex. 3 |
| 0.3 MPM | 63.14 | 64.18 | 77.70 | 87.51 | 45.58 | 55.74 |
| 10 MPM | 99.60 | 136.93 | 114.70 | 165.47 | 106.9 | 111.47 |
| 100 MPM | 137.43 | 159.50 | 170.97 | 172.87 | 126.77 | 142.30 |
| 300 MPM | 100.37 | 123.40 | 123.90 | 131.80 | 99.23 | 108.50 |

**Table 8: 7 Day Aged Release Force**

| Oven Temperature | 180 °C | | | | | |
|---|---|---|---|---|---|---|
| Dwell Time (s) | 6 | | | 3 | | |
| Example: | C.E. 1 | Ex. 2 | Ex. 3 | C.E. 1 | Ex. 2 | Ex. 3 |
| 0.3 MPM | 48.90 | 57.19 | 62.47 | 79.88 | 78.13 | 65.42 |
| 10 MPM | 107.60 | 133.43 | 144.80 | 169.83 | 125.60 | 126.60 |
| 100 MPM | 108.37 | 154.70 | 148.07 | 181.10 | 167.57 | 169.13 |
| 300 MPM | 82.33 | 122.60 | 97.43 | 155.73 | 138.57 | 81.13 |

**Table 9: 1 Month Aged Release Force**

| Oven Temperature | 160 °C | | | | | |
|---|---|---|---|---|---|---|
| Dwell Time (s) | 6 | | | 3 | | |
| Example: | C.E. 1 | Ex. 2 | Ex. 3 | C.E. 1 | Ex. 2 | Ex. 3 |
| 0.3 MPM | 64.41 | 80.81 | 93.40 | 101.23 | 65.04 | 69.57 |
| 10 MPM | 86.07 | 100.85 | 131.94 | 145.49 | 98.45 | 110.78 |
| 100 MPM | 116.25 | 170.59 | 205.05 | 175.02 | 140.06 | 168.46 |
| 300 MPM | 72.28 | 122.54 | 149.40 | 143.70 | 116.39 | 133.58 |

**Table 10: 1 Month Aged Release Force**

| Oven Temperature | 180 °C | | | | | |
|---|---|---|---|---|---|---|
| Dwell Time (s) | 6 | | | 3 | | |
| Example: | C.E. 1 | Ex. 2 | Ex. 3 | C.E. 1 | Ex. 2 | Ex. 3 |
| 0.3 MPM | 80.56 | 69.70 | 87.70 | 109.80 | 97.04 | 66.42 |
| 10 MPM | 125.89 | 124.58 | 112.15 | 157.71 | 140.26 | 86.08 |
| 100 MPM | 152.15 | 174.925 | 159.27 | 179.62 | 216.97 | 150.31 |
| 300 MPM | 106.40 | 147.25 | 142.30 | 177.35 | 167.14 | 121.81 |

### Example 5 and Comparative Example 5:

Example 5 and Comparative Example 5 prepared compositions for preparing release coatings. The particular amounts of each component utilized in the compositions of Example 5 and Comparative Example 5 are detailed below in Table 11.

**Table 11: Example 5 and Comparative Example 5**

| Component: | Ex. 5 | C.E. 5 |
|---|---|---|
| Base Composition 3 (g) | 88.268 | 88.268 |
| Conventional Catalyst Blend (g) | 0 | 8.596 |
| Inventive Catalyst Blend (g) | 8.596 | 0 |
| (B2) (g) | 6.0013 | 6.0013 |

To prepare the compositions of Example 5 and Comparative Example 5, the Base Composition 3 and the Conventional or Inventive Catalyst Blend, as the case may be, were combined and mixed to give a mixture. Each mixture was aged at RT under air in a capped vial. The color change of each mixture was monitored over time. Then, Organosilicon Compound (B2) was added to each mixture to give a composition, and the composition was mixed on dental mixer at 3500 RPM for 30 seconds. Each composition was then analyzed via differential scanning calorimetry (DSC) and for appearance over time via visual inspection. DSC was measured via a TA DSC-2500 DSC by heating each composition from 40 °C to 200 °C under N₂. In each of the compositions, the content of platinum was the same at 93 ppm, and the total ratio of silicon-bonded hydrogen atoms to silicon-bonded vinyl groups was the same at 2/1 mol/mol (SiH to SiVi).Tables 12 and 13 below describe the DSC data at time intervals for the compositions of Example 5 and Comparative Example 5, respectively. In Tables 12 and 13, appearance is based on visual inspection, and is reported both for the mixture excluding Organosilicon Compound (B2) and for the composition including the Organosilicon Compound (B2).

**Table 12: Example 5**

| Aging Time | 0 mins | 2 hrs | 17 hrs | 20 hrs | 5 days |
|---|---|---|---|---|---|
| Appearance of the Mixture | Clear/ colorless | Clear/ colorless | Clear/ colorless | Clear/ colorless | Clear/ colorless |
| Tpeak (°C) of the Composition | 110.04 | 110.44 | 109.92 | 109.66 | 109.62 |
| T95 (°C) of the Composition | 111.38 | 112.11 | 111.15 | 110.9 | 110.7 |
| Viscosity Doubling Time (min) of the Composition at 80°C | 31 | n/a | n/a | n/a | 29.2 |
| Appearance of the Composition | Clear/ colorless | Clear/ colorless | Clear/ colorless | Clear/ colorless | Clear/ colorless |

**Table 13: Comparative Example 5**

| Aging Time | 0 mins | 2 hrs | 17 hrs | 20 hrs | 5 days |
|---|---|---|---|---|---|
| Appearance of the Mixture | Clear/ colorless | Not clear/ Brown | Small particle precipitate/ Dark Brown | Small particle precipitate/ Dark Brown | Small particle precipitate/very dark Brown |
| Tpeak (°C) of the Composition | 109.16 | 109.67 | 113.31 | 113.6 | 119.23 |
| T95 (°C) of the Composition | 110.28 | 110.8 | 124.33 | 125.5 | 146.94 |
| Viscosity Doubling Time (min) of the Composition at 80°C | 29.7 | n/a | n/a | n/a | 60.666 |
| Appearance of the Composition | Clear/ colorless | Not clear/ Brown | Small precipitate/ Dark Brown | Small precipitate/ Dark Brown | Small precipitate/very dark Brown |

As demonstrated by Table 13, the combination of Conventional Catalyst Blend and Inhibitor caused undesirable precipitation and color changes over time for the composition of Comparative Example 5, which is undesirable and problematic in the release coating industry as a whole. As similarly shown by Table 13, when the composition of Comparative Example 5 including the Conventional Catalyst Blend and Inhibitor was aged, the cure performance became increasingly worse - Tₚₑₐₖ, T₉₅ and viscosity doubling time at 80 °C dramatically increased over time. Further still, color change and precipitation also increased over time for the composition of Comparative Example 5. In contrast, the inventive Catalyst has no compatibility issues with the Inhibitor, as demonstrated by the composition of Example 5 having no cure performance change (Tₚₑₐₖ, T₉₅ and viscosity doubling time at 80 °C remained almost unchanged) over time. In addition, no color change or precipitation was observed with respect to Example 5.

The invention has been described in an illustrative manner, and it is to be understood that the terminology which has been used is intended to be in the nature of words of description rather than of limitation. Obviously, many modifications and variations of the present invention are possible in light of the above teachings. The invention may be practiced otherwise than as specifically described.

## Claims

1. A composition for preparing a release coating, said composition comprising:
(A) an organopolysiloxane comprising at least one RSiO_{3/2} siloxy unit or at least one SiO_{4/2} siloxy unit, where R is a substituted or unsubstituted hydrocarbyl group, the (A) organopolysiloxane having an average of at least two silicon-bonded ethylenically unsaturated groups per molecule;
(B) an organosilicon compound having an average of at least two silicon-bonded hydrogen atoms per molecule;
(C) a hydrosilylation catalyst comprising a metal-ligand complex having the formula MLₓD_{y}, wherein M is a metal; x is equal to the oxidation state of M; each D is independently a neutral coordinating ligand; y is zero or an integer from 1 to 4; and
each L is a mono-anionic ligand independently having the formula: 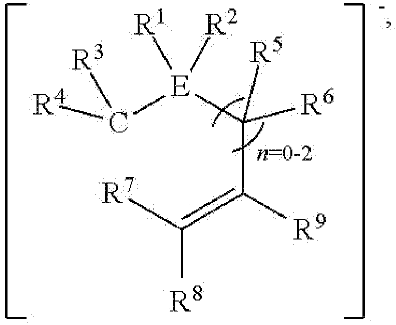
wherein each R¹ and R² is independently a halide or a substituted or unsubstituted group selected from a C₁-C₆ alkyl, a C₃-C₈ cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₈ alkynyl, a C₁-C₆ hydroxyl, a C₃-C₁₀ arylene, a C₃-C₁₀ heteroarylene, a C₂-C₁₀ alkenylene, a C₃-C₁₀ cycloalkenylene, and a C₂-C₁₀ alkynylene,
wherein each of R³, R⁴, R⁵, R⁶, R⁷, R⁸, and R⁹ is independently selected from hydrogen, a halide, or a substituted or unsubstituted group selected from a C₁-C₆ alkyl, a C₃-C₈ cycloalkyl, a C₃-C₈ heterocycloalkyl, a C₆-C₁₀ alkylaryl, a C₁-C₆ alkoxy, a C₆-C₁₀ aryl, a C₆-C₁₀ heteroaryl, a silyl, a C₂-C₈ alkenyl, a C₂-C₁₀ alkynyl, a C₁-C₈ hydroxyl, a C₃-C₁₀ arylene, a C₃-C₁₀ heteroarylene, a C₂-C₁₀ alkenylene, a C₃-C₁₀ cycloalkenylene, and a C₂-C₁₀ alkynylene; and
wherein E is C or Si.

2. The composition of claim 1, wherein, in the metal-ligand complex of component (C): (i) M is a platinum group metal selected from Ru, Rh, Pd, Os, Ir, and Pt; (ii) E is Si; (iii) R¹ and R² are independently selected alkyl groups; (iv) each of R³, R⁴, R⁵, R⁶, R⁷, R⁸, and R⁹ is hydrogen; or (v) any combination of (i) to (iv).

3. The composition of claim 1 or 2, wherein: (i) each D is independently 1,5-cyclooctadiene, bicyclo[2.2.1]hepta-2,5-diene, 1,5-hexadiene, ethylene, dibenzo[a,e]cyclooctene, N,N,N',N'-tetramethylethylenediamine, cyclooctatriene, norbornadiene, or cyclooctene; (ii) the composition is free from organic solvents; or (iii) both (i) and (ii).

4. The composition of any one preceding claim, wherein the metal-ligand complex of component (C) has one of the following formulas: 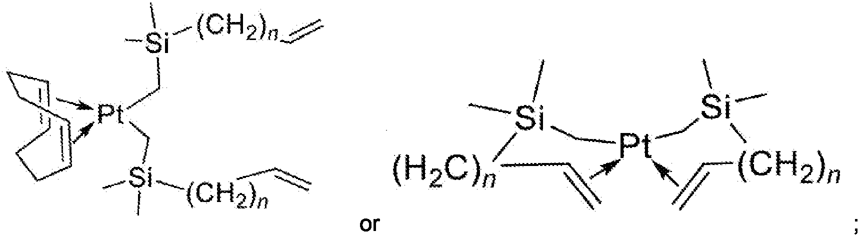 where each n is independently from 0 to 2.

5. The composition of any one preceding claim, wherein the (A) organopolysiloxane has the formula (R₃SiO_{1/2})ₓ(R₂SiO_{2/2})_{z}(SiO_{4/2}), where each R is independently a substituted or unsubstituted hydrocarbyl group, with the proviso that at least two of R are independently selected ethylenically unsaturated groups, subscript x is from 0.05 to 4; subscript z is from 1 to 3,000.

6. The composition of any one preceding claim, wherein the (B) organosilicon compound has the formula: H_{y'}R¹⁰_{3-y'}Si-(OSiR¹⁰₂)ₘ-(OSiR¹⁰H)_{m'}-OSiR¹⁰_{3-y'}H_{y'}, where each R¹⁰ is an independently selected hydrocarbyl group free of aliphatic unsaturation, each y' is independently selected from 0 or 1, subscripts m and m' are each independently from 0 to 1,000 with the proviso that m and m' are not simultaneously 0 and m+m' is from 1 to 1,000; or wherein the (B) organosilicon compound has the formula: [(HR¹⁰SiO_{2/2})ₐ(-R¹⁰SiO_{3/2})_{b}]_{c}[(R¹⁰₂SiO_{2/2})_{w}]_{d}, where each R¹⁰ is independently selected and defined above, subscript a is from 0 to 10; subscript b is from 1 to 4, with the proviso that (a+b)=3 to 12; 0<c<100; 2≤w≤2,000; and 0<d<100, with the proviso that c>d.

7. The composition of any one preceding claim, wherein: (i) the (B) organosilicon compound comprises an organohydrogensiloxane including an average of at least two pendent silicon-bonded hydrogen atoms per molecule; (ii) the molar ratio of SiH to silicon-bonded ethylenically unsaturated groups in components (A) and (B) is from 1:1 to 5:1; or (iii) both (i) and (ii).

8. The composition of any one preceding claim, having a bathlife of at least 20 minutes at 40 C when components (A)-(C) are combined in the absence of any inhibitors.

9. The composition of any one of claims 1-7, further comprising at least one of (D) an inhibitor, (E) an anchorage additive, (F) an anti-mist additive, and/or (G) a release modifier

10. A method of preparing the composition of any one preceding claim, said method comprising combining the (A) organopolysiloxane, the (B) organopolysiloxane, and the (C) hydrosilylation catalyst to give the composition.

11. The method of claim 10, further comprising preparing the (C) hydrosilylation catalyst.

12. A method of forming a coated substrate, said method comprising:
applying a composition on a substrate; and
curing the composition to give a release coating on the substrate, thereby forming the coated substrate;
wherein the composition is the composition of any one of claims 1-9.

13. The method of claim 12, wherein the substrate comprises cellulose and/or a polymer.

14. A coated substrate comprising a release coating disposed on a substrate formed in accordance with the method of claim 12 or 13.

## Patentansprüche

1. Zusammensetzung zum Herstellen einer Trennbeschichtung, die Zusammensetzung umfassend:
(A) ein Organopolysiloxan, umfassend mindestens eine RSiO_{3/2}-Siloxyeinheit oder mindestens eine SiO_{4/2}-Siloxyeinheit, wobei R eine substituierte oder nicht substituierte Kohlenwasserstoffgruppe ist, wobei das Organopolysiloxan (A) im Durchschnitt mindestens zwei siliciumgebundene ethylenisch ungesättigte Gruppen pro Molekül aufweist;
(B) eine Organosiliciumverbindung, die im Durchschnitt mindestens zwei siliciumgebundene Wasserstoffatome pro Molekül aufweist;
(C) einen Hydrosilylierungskatalysator, umfassend einen Metall-Ligand-Komplex, der die Formel MLₓD_{y} aufweist, wobei M ein Metall ist; x gleich dem Oxidationszustand von M ist; jedes D unabhängig ein neutraler koordinierender Ligand ist; y Null oder eine ganze Zahl von 1 bis 4 ist; und
jedes L ein monoanionischer Ligand ist, der unabhängig die Formel aufweist: 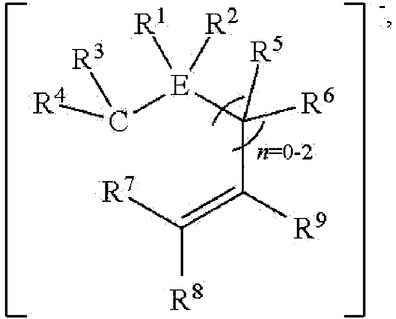
wobei jedes R¹ und R² unabhängig ein Halogenid oder eine substituierte oder nicht substituierte Gruppe ist, ausgewählt aus einem C₁-C₆-Alkyl, einem C₃-C₃-Cycloalkyl, einem C₃-C₈-Heterocycloalkyl, einem C₆-C₁₀-Alkylaryl, einem C₁-C₆-Alkoxy, einem C₆-C₁₀-Aryl, einem C₆-C₁₀-Heteroaryl, einem Silyl, einem C₂-C₈ -Alkenyl, einem C₂-C₈ -Alkinyl, einem C₁-C₆-Hydroxyl, einem C₃-C₁₀-Arylen, einem C₃-C₁₀-Heteroarylen, einem C₂-C₁₀-Alkenylen, einem C₃-C₁₀-Cycloalkenylen und einem C₂-C₁₀-Alkinylen,
wobei jedes R³, R⁴, R⁵, R⁶, R⁷, R⁸ und R⁹ unabhängig ausgewählt ist aus Wasserstoff, einem Halogenid oder einer substituierten oder unsubstituierten Gruppe, ausgewählt aus einem C₁-C₆-Alkyl, einem C₃-C₃-Cycloalkyl, einem C₃-C₈-Heterocycloalkyl, einem C₆-C₁₀-Alkylaryl, einem C₁-C₆-Alkoxy, einem C₆-C₁₀-Aryl, einem C₆-C₁₀-Heteroaryl, einem Silyl, einem C₂-C₈ -Alkenyl, einem C₂-C₈ -Alkinyl, einem C₁-C₆-Hydroxyl, einem C₃-C₁₀-Arylen, einem C₃-C₁₀-Heteroarylen, einem C₂-C₁₀-Alkenylen, einem C₃-C₁₀-Cycloalkenylen und einem C₂-C₁₀-Alkinylen; und
wobei E C oder Si ist.

2. Zusammensetzung nach Anspruch 1, wobei, in dem Metall-Ligand-Komplex von Komponente (C): (i) M ein Platingruppenmetall ist, ausgewählt aus Ru, Rh, Pd, Os, Ir und Pt; (ii) E Si ist; (iii) R¹ und R² unabhängig ausgewählte Alkylgruppen sind; (iv) jedes von R³, R⁴, R⁵, R⁶, R⁷, R⁸ und R⁹ Wasserstoff ist; oder (v) eine beliebige Kombination von (i) bis (iv).

3. Zusammensetzung nach Anspruch 1 oder 2, wobei: (i) jedes D unabhängig 1,5-Cyclooctadien, Bicyclo[2.2.1]hepta-2,5-dien, 1,5-Hexadien, Ethylen, Dibenzo[a,e]cycloocten, N,N,N',N'-Tetramethylethylendiamin, Cyclooctatrien, Norbornadien oder Cycloocten ist; (ii) die Zusammensetzung frei von organischen Lösungsmitteln ist; oder (iii) sowohl (i) als auch (ii).

4. Zusammensetzung nach einem der vorstehenden Ansprüche, wobei der Metall-Ligand-Komplex der Komponente (C) eine der folgenden Formeln aufweist: 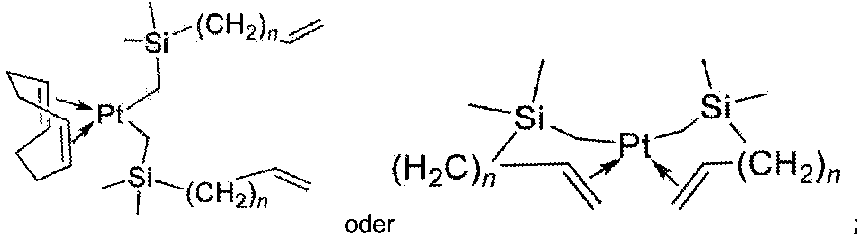 wobei jedes n unabhängig von 0 bis 2 ist.

5. Zusammensetzung nach einem der vorstehenden Ansprüche, wobei das (A) Organopolysiloxan die Formel (R₃SiO_{1/2})ₓ(R₂SiO_{2/2})_{z}(SiO_{4/2}) aufweist, wobei jedes R unabhängig eine substituierte oder nicht substituierte Kohlenwasserstoffgruppe ist, mit der Maßgabe, dass mindestens zwei von R unabhängig ausgewählte ethylenisch ungesättigte Gruppen sind, Index x von 0,05 bis 4 ist; Index z von 1 bis 3.000 ist.

6. Zusammensetzung nach einem der vorstehenden Ansprüche, wobei die (B) Organosiliciumverbindung die Formel aufweist: H_{y'}R¹⁰_{3-y'}Si-(OSiR¹⁰₂)ₘ-(OSiR¹⁰H)_{m'}-OSiR¹⁰_{3-y'}H_{y'}, wobei jedes R¹⁰ eine unabhängig ausgewählte Kohlenwasserstoffgruppe frei von aliphatischer Ungesättigtheit ist, wobei jedes y' aus 0 oder 1 unabhängig ausgewählt ist, Indizes m und m' jeweils unabhängig von 0 bis 1.000 sind, mit der Maßgabe, dass m und m' nicht gleichzeitig 0 sind und m+m' von 1 bis 1.000 ist; oder wobei die (B) Organosiliciumverbindung die Formel aufweist: [(HR¹⁰SiO_{2/2})ₐ(-R¹⁰SiO_{3/2})_{b}]_{c}[(R¹⁰₂SiO_{2/2})_{w}]_{d}, wobei jedes R¹⁰ unabhängig ausgewählt und vorstehend definiert ist, Index a von 0 bis 10 ist; Index b von 1 bis 4 ist, mit der Maßgabe, dass (a+b)=3 bis 12; 0<c<100; 2≤w≤2.000; und 0<d<100, mit der Maßgabe, dass c>d.

7. Zusammensetzung nach einem der vorstehenden Ansprüche, wobei: (i) die (B) Organosiliciumverbindung ein Organohydrogensiloxan einschließlich eines Durchschnitts von mindestens zwei siliciumgebundenen Wasserstoffatomen pro Molekül umfasst; (ii) das Molverhältnis von SiH zu siliciumgebundenen ethylenisch ungesättigten Gruppen in den Komponenten (A) und (B) von 1 : 1 bis 5 : 1 ist; oder (iii) sowohl (i) als auch (ii).

8. Zusammensetzung nach einem der vorstehenden Ansprüche, die eine Badlebensdauer von mindestens 20 Minuten bei 40 °C aufweist, wenn die Komponenten (A)-(C) in Abwesenheit von Hemmern kombiniert werden.

9. Zusammensetzung nach einem der Ansprüche 1 bis 7, ferner umfassend mindestens eines von (D) einem Hemmer, (E) einem Verankerungsadditiv, (F) einem Anti-Nebel-Additiv und/oder (G) einem Freisetzungsmodifikator.

10. Verfahren zum Herstellen der Zusammensetzung nach einem der vorstehenden Ansprüche, das Verfahren umfassend das Kombinieren des (A) Organopolysiloxans, des (B) Organopolysiloxans und des (C) Hydrosilylierungskatalysators, um die Zusammensetzung zu ergeben.

11. Verfahren nach Anspruch 10, ferner umfassend das Herstellen des (C) Hydrosilylierungskatalysators.

12. Verfahren zum Ausbilden eines beschichteten Substrats, das Verfahren umfassend:
Aufbringen einer Zusammensetzung auf ein Substrat; und
Härten der Zusammensetzung, um eine Trennbeschichtung auf dem Substrat zu ergeben, wobei dadurch das beschichtete Substrat ausgebildet wird;
wobei die Zusammensetzung die Zusammensetzung nach einem der Ansprüche 1 bis 9 ist.

13. Verfahren nach Anspruch 12, wobei das Substrat Zellulose und/oder ein Polymer umfasst.

14. Beschichtetes Substrat, umfassend eine Trennbeschichtung, die auf einem Substrat angeordnet ist, das gemäß dem Verfahren nach Anspruch 12 oder 13 ausgebildet wird.

## Revendications

1. Composition permettant de préparer un revêtement antiadhésif, ladite composition comprenant :
(A) un organopolysiloxane comprenant au moins un motif siloxy RSiO_{3/2} ou au moins un motif siloxy SiO_{4/2}, où R est un groupe hydrocarbyle substitué ou non substitué, l'organopolysiloxane (A) ayant en moyenne au moins deux groupes à insaturation éthylénique liés à du silicium par molécule ;
(B) un composé organosilicium ayant en moyenne au moins deux atomes d'hydrogène liés à du silicium par molécule ;
(C) un catalyseur d'hydrosilylation comprenant un complexe métal-ligand ayant la formule MLₓD_{y}, dans laquelle M est un métal ; x est égal à l'état d'oxydation de M ; chaque D est indépendamment un ligand de coordination neutre ; y vaut zéro ou est un entier allant de 1 à 4 ; et
chaque L est un ligand mono-anionique ayant indépendamment la formule : 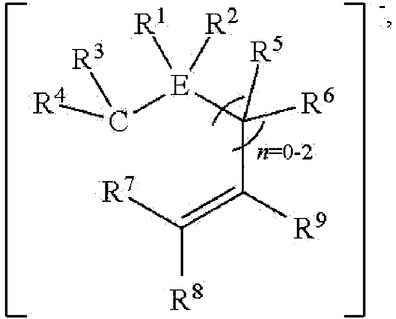
dans laquelle chaque R¹ et R² est indépendamment un halogénure ou un groupe substitué ou non substitué choisi parmi un alkyle en C₁-C₆, un cycloalkyle en C₃-C₈, un hétérocycloalkyle en C₃-C₈, un alkylaryle en Ce-C₁₀, un alcoxy en C₁-C₆, un aryle en C₆-C₁₀, un hétéroaryle en C₆-C₁₀, un silyle, un alcényle en C₂-C₈, un alcynyle en C₂-C₈, un hydroxyle en C₁-C₆, un arylène en C₃-C₁₀, un hétéroarylène en C₃-C₁₀, un alcénylène en C₂-C₁₀, un cycloalcénylène en C₃-C₁₀, et un alcynylène en C₂-C₁₀,
dans laquelle chacun de R³, R⁴, R⁵, R⁶, R⁷, R⁸, et R⁹ est choisi indépendamment parmi hydrogène, un halogénure, ou un groupe substitué ou non substitué choisi parmi un alkyle en C₁-C₆, un cycloalkyle en C₃-C₈, un hétérocycloalkyle en C₃-C₈, un alkylaryle en C₆-C₁₀, un alcoxy en C₁-C₆, un aryle en C₆-C₁₀, un hétéroaryle en C₆-C₁₀, un silyle, un alcényle en C₂-C₈, un alcynyle en C₂-C₁₀, un hydroxyle en C₁-C₆, un arylène en C₃-C₁₀, un hétéroarylène en C₃-C₁₀, un alcénylène en C₂-C₁₀, un cycloalcénylène en C₃-C₁₀, et un alcynylène en C₂-C₁₀ ; et
dans laquelle E est C ou Si.

2. Composition selon la revendication 1, dans laquelle, dans le complexe métal-ligand du composant (C) : (i) M est un métal du groupe du platine choisi parmi Ru, Rh, Pd, Os, Ir, et Pt ; (ii) E est Si ; (iii) R¹ et R² sont des groupes alkyle choisis indépendamment ; (iv) chacun de R³, R⁴, R⁵, R⁶, R⁷, R⁸, ET R⁹ est hydrogène ; ou (v) toute combinaison de (i) à (iv).

3. Composition selon la revendication 1 ou 2, dans laquelle : (i) chaque D est indépendamment 1,5-cyclo-octadiène, bicyclo[2.2.1]hepta-2,5-diène, 1,5-hexadiène, éthylène, dibenzo[a,e]cyclooctène, N,N,N',N'-tétraméthyléthylènediamine, cyclooctatriène, norbornadiène, ou cyclooctène ; (ii) la composition est exempte de solvant organique ; ou (iii) à la fois (i) et (ii).

4. Composition selon l'une quelconque revendication précédente, dans laquelle le complexe métal-ligand du composant (C) a l'une des formules suivantes : 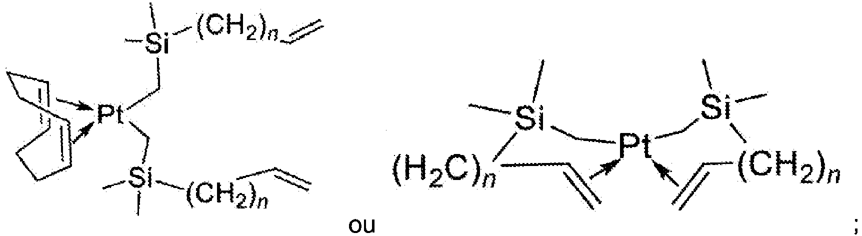 où chaque n va indépendamment de 0 à 2.

5. Composition selon l'une quelconque revendication précédente, dans laquelle l'organopolysiloxane (A) a la formule (R₃SiO_{1/2})ₓ(R₂SiO_{2/2})_{z}(SiO_{4/2}), où chaque R est indépendamment un groupe hydrocarbyle substitué ou non substitué, à condition qu'au moins deux des R soient des groupes à insaturation éthylénique choisis indépendamment, l'indice x va de 0,05 à 4 ; l'indice z va de 1 à 3 000.

6. Composition selon l'une quelconque revendication précédente, dans laquelle chaque le composé organosilicium (B) a la formule : H_{y'}R¹⁰_{3-y'}Si-(OSiR¹⁰₂)ₘ-(OSiR¹⁰H)_{m'}-OSiR^{1o}_{3-y'}H_{y'}, où chaque R¹⁰ est un groupe hydrocarbyle choisi indépendamment exempt d'insaturation aliphatique, chaque y' est choisi indépendamment parmi 0 ou 1, les indices m et m' vont chacun indépendamment de 0 à 1 000 à condition que m et m' ne vaillent pas simultanément 0 et que m+m' aille de 1 à 1 000 ; ou dans laquelle le composé organosilicium (B) a la formule : [(HR¹⁰SiO_{2/2})ₐ(-R¹⁰SiO_{3/2})_{b}]_{c}[(R¹⁰₂SiO_{2/2})_{w}]_{d}, où chaque R¹⁰ est choisi indépendamment et défini ci-dessus, l'indice a va de 0 à 10 ; l'indice b va de 1 à 4, à condition que (a + b) = 3 à 12 ; 0 < c < 100 ; 2 ≤ w ≤ 2 000 ; et 0 < d < 100, à condition que c > d.

7. Composition selon l'une quelconque revendication précédente, dans laquelle : (i) le composé organosilicium (C) comprend un organohydrogénosiloxane comportant en moyenne au moins deux atomes d'hydrogène pendants liés à du silicium par molécule ; (ii) le rapport molaire de SiH aux groupes à insaturation éthylénique liés à du silicium dans les composants (A) et (B) va de 1:1 à 5:1 ; ou (iii) à la fois (i) et (ii).

8. Composition selon l'une quelconque revendication précédente, ayant une durée de vie en bain d'au moins 20 minutes à 40 °C lorsque les composants (A) à (C) sont combinés en l'absence de tout inhibiteur.

9. Composition selon l'une quelconque des revendications 1 à 7, comprenant en outre au moins l'un parmi (D) un inhibiteur, (E) un additif d'ancrage, (F) un additif anti-buée, et/ou (G) un modificateur de libération

10. Procédé de préparation de la composition selon l'une quelconque revendication précédente, ledit procédé comprenant la combinaison de l'organopolysiloxane (A), de l'organopolysiloxane (B), et du catalyseur d'hydrosilylation (C) pour obtenir la composition.

11. Procédé selon la revendication 10, comprenant en outre la préparation du catalyseur d'hydrosilylation (C).

12. Procédé de formation d'un substrat revêtu, ledit procédé comprenant :
l'application d'une composition sur un substrat ; et
le durcissement de la composition pour donner un revêtement antiadhésif sur le substrat, permettant ainsi de former le substrat revêtu ;
dans lequel la composition est la composition selon l'une quelconque des revendications 1 à 9.

13. Procédé selon la revendication 12, dans lequel le substrat comprend de la cellulose et/ou un polymère.

14. Substrat revêtu comprenant un revêtement antiadhésif disposé sur un substrat formé conformément au procédé selon la revendication 12 ou 13.
